Europäisches Patentamt

European Patent Office

Office européen des brevets

(11) Numéro de publication: **0 209 944**
**B1**

(12) **FASCICULE DE BREVET EUROPEEN**

(45) Date de publication du fascicule du brevet: **16.05.90**

(21) Numéro de dépôt: **86201231.7**

(22) Date de dépôt: **15.07.86**

(51) Int. Cl.⁵: **H 02 J 7/34,** H 02 M 7/48,
H 02 M 7/797

(54) **Dispositif statique de réglage des échanges d'énergie entre des systèmes électriques générateur et/ou récepteur.**

(30) Priorité: **22.07.85 FR 8511291**

(43) Date de publication de la demande:
**28.01.87 Bulletin 87/05**

(45) Mention de la délivrance du brevet:
**16.05.90 Bulletin 90/20**

(84) Etats contractants désignés:
**DE GB IT NL**

(56) Documents cités:
**FR-A-2 250 223
US-A-4 096 557
US-A-4 122 512**

(73) Titulaire: **AGENCE NATIONALE DE
VALORISATION DE LA RECHERCHE (A.N.V.A.R.)
Etablissement public de droit français
43, rue de Caumartin
F-75436 Paris Cédex 09 (FR)**

(72) Inventeur: **Cheron, Yvon
30, avenue de Castres
F-31500 Toulouse (FR)**
Inventeur: **Jacob, Pierre
49, rue Belliard
F-75018 Paris (FR)**
Inventeur: **Salesses, Jacques
12, rue des Dardanelles
F-75017 Paris (FR)**

(74) Mandataire: **Barre, Philippe
Cabinet Barre-Gatti-Laforgue 95 rue des
Amidonniers
F-31069 Toulouse Cédex (FR)**

Courier Press, Leamington Spa, England.

**Description**

L'invention qui a été faite au Laboratoire d'Electrotechnique et d'Electronique Industrielle de l'Institut National Polytechnique de Toulouse, Unité associée au CNRS n° 847, concerne un dispositif statique de réglage des échanges d'énergie entre au moins deux systèmes électriques générateur et/ou récepteur en vue de contrôler les puissances délivrées ou absorbées par lesdits systèmes selon un cahier des charges déterminé. L'invention peut notamment s'appliquer pour régler les échanges d'énergie entre des sources de tension continue, associées le cas échéant à des charges réceptrices (sources de tension à fonctionnement uniquement en récepteur, charges passives...).

Dans de nombreuses applications, où sont mis en jeu des circuits possédant plusieurs systèmes électriques générateur et/ou récepteur, il est nécessaire d'adapter la forme de l'énergie reçue ou générée par chaque système en fonction d'impératifs prédéfinis, en particulier propres aux systèmes concernés; par exemple une batterie d'accumulateurs intégrée dans un groupe de secours doit, en fonctionnement récepteur, être chargée suivant un régime nominal spécifique et, en cas de défaillance du réseau, fonctionner en générateur et délivrer un courant adapté aux besoins et compatible avec les caractéristiques de ladite batterie.

La solution la plus répandue pour régler les échanges d'énergie entre plusieurs systèmes consiste à interposer des convertisseurs d'énergie entre couple de systèmes appelés à échanger de la puissance et à piloter chaque convertisseur en fonction de l'échange d'énergie souhaité entre les deux systèmes du couple par des techniques traditionnelles de contrôle de puissance (modulation de largeur d'impulsion, contrôle d'angle de redressement...); chaque convertisseur interposé entre deux systèmes électriques donnés est choisi pour présenter en entrée les caractéristiques d'un système (fréquence, tension...) et en sortie les caractéristiques de l'autre. On pourra notamment se reporter au brevet US—A—4 122 512 qui décrit un tel dispositif dans lequel le contrôle de puissance est réalisé par un contrôle d'angle de redressement, la fréquence de fonctionnement du convertisseur étant imposée par un des systèmes (réseau triphasé).

Dans la quasi-totalité des applications, les systèmes concernés sont continus ou basses fréquences (fréquences industrielles: 50 Hz ou 400 Hz dans l'aéronautique) et il est souvent nécessaire de réaliser un isolement galvanique et une adaptation d'impédance entre lesdits systèmes. Dans le cas de la basse fréquence, les transformateurs, filtres... qui sont nécessaires, sont lourds, encombrants et onéreux; dans le cas du continu, il est nécessaire de prévoir des étages alternatifs supplémentaires, soit basses fréquences avec les défauts sus-évoqués, soit de préférence hautes fréquences; ce dernier type d'étages (alternatifs hautes fréquences) est parfois prévu dans les applications basses fréquences pour supprimer les inconvénients sus-évoqués (cette tendance se généralisant à l'heure actuelle).

Toutefois, les solutions traditionnelles de commande des convertisseurs sont alors difficilement applicables en raison de leurs limites technologiques et il est nécessaire de faire appel à d'autres techniques. Dans le cas d'un échange entre deux systèmes, une de ces techniques consiste à ajuster la puissance entre les deux systèmes en insérant un circuit oscillant entre ceux-ci et en faisant varier la fréquence d'oscillation de ce circuit; par exemple la solution ci-après vise à régler les échanges entre deux sources continues ou alternatives basses fréquences et est décrite dans de nombreuses publications et notamment dans les publications suivantes:

(1) *Schwarz, F.C.,* A Method of Resonant Current Pulse Modulation for Power Converters: IEEE Transactions on Industrial Electronics and Control Instrumentation, Vol. 17, N° 3, May 1970.

(2) *Schwarz, F. C.,* An improved method of resonant current pulse modulation for power converters: IEEE Transactions on Industrial Electronics and Control Instrumentation, IECI-23, N° 2, 1976.

(3) *Schwarz, F. C. and Klaasens, J. B.,* A controllable secondary multikilowatt d.c. current source with constant maximum power factor in its three phase supply line: IEEE Transactions on Industrial Electronics and Control Instrumentation, Vol. 23, N° 2, 1976.

(4) *Schwarz, F. C. and Klaasens, J. B.,* A controllable 45 kW current source for dc machines: IEEE Transactions on Industry Applications, Vol. 1A—15 N° 4, July/August 1979.

(5) *Schwarz, F. C.,* A doublesided cycloconverter; Proceedings of the 10th IEEE Power Electronics Specialists Conference, San Diego, June 1979.

(6) *Schwarz, F. C. and Moize de Chateleux, W.L.F.H.A.* A multikilowatt polyphase ac/dc converter with reversible power flow and without passive low frequency filters; the 10th IEEE Power Electronics Specialists Conference, San Diego, June 1979.

(7) *Schwarz, F. C. and Klaasens J. B.,* A Reversible Smooth Current Source with Momentary Internal Response for Nondissipative Control of Multikilowatt dc Machines: IEEE Summer Meeting, Minneapolis, Minnesota, July 13—18, 1980.

(8) brevet US—A—4 096 557 au nom de SCHWARZ.

Cette solution consiste à associer à chaque source continue ou basse fréquence un convertisseur et à interconnecter les deux convertisseurs par un circuit oscillant LC série. Un des convertisseurs impose une fréquence variable et la puissance échangée entre les deux sources est ajustée par variation de cette fréquence; la commande de l'autre convertisseur détermine uniquement le sens de l'échange d'énergie.

Le défaut majeur de ce type de dispositif provient de son principe même de fonctionnement: la variation de fréquence qui permet le réglage de

puissance doit s'effectuer sur une large plage pour autoriser des réglages intéressants en pratique; d'une part, aux fréquences concernées, de telles variations rendent les filtrages difficiles en raison de l'étendue du spectre et peuvent donc être sources de pollutions de l'environnement (risques de perturbations d'autres équipements électriques même éloignés, interférences électromagnétiques); d'autre part, certains réglages de puissance, en particulier au voisinage de la puissance nulle, sont parafois difficiles à réaliser avec de tels dispositifs (car requérant des fréquences très élevées ou très basses vis-à-vis de la fréquence moyenne de fonctionnement).

De plus, ce principe de réglage par variation de fréquence est appliqué à un échange entre deux systèmes électriques et paraît difficilement transposable à des échanges entre un nombre plus élevé de systèmes électriques.

La présente invention se propose de fournir un nouveau dispositif de réglage d'échanges d'énergie, susceptible de bénéficier des avantages de hautes fréquences sans en présenter les défauts sus-évoqués.

Un objectif de l'invention est en particulier de permettre un fonctionnement à haute fréquence constante, afin d'obtenir un spectre parfaitement défini et donc et rendre les filtrages beaucoup plus aisés.

Un autre objectif lié à ce fonctionnement à haute fréquence constante est d'obtenir des temps de réponse très courts, indépendants du réglage de puissance.

Un autre objectif est d'obtenir de larges plaques de variation de puissance, sans aucune difficulté particulière au voisinage de la puissance nulle.

Un autre objectif est de réduire considérablement les poids, encombrement et coût des éléments passifs accessoires, nécessaires dans chaque application (filtres, transformateurs d'isolement galvanique ou d'adaptation d'impédance,...).

Un autre objectif est d'améliorer le rendement des convertisseurs en les amenant à fonctionner, quels que soient leurs types, selon des régimes beaucoup plus favorables que dans le cas précité de la variation de fréquence.

Un autre objectif est de fournir un dispositif ayant un domaine d'application très large, apte en particulier à gérer les échanges énergétiques entre des systèmes en nombre quelconque supérieur ou égal à 2.

A cet effet, le dispositif visé par l'invention pour le réglage des échanges d'énergie entre au moins deux systèmes électriques générateur et/ou récepteur, en vue de contrôler les puissances délivrées ou absorbées par lesdits systèmes selon un cahier des charges déterminé, comprend:

(a) associé à chaque système électrique, au moins un convertisseur statique d'énergie électrique ($C_p$, $Ca_1...Ca_n$) connecté audit système et possédant une entrée de pilotage pour recevoir un signal de pilotage, lesdits convertisseurs étant aptes à convertir les grandeurs électriques des divers systèmes en des grandeurs électriques de fréquences et de phases fonctions des signaux de pilotage,

(c) un réseau oscillant (OSC) connecté aux divers convertisseurs et apte à assurer un stockage temporaire d'énergie.

Le dispositif conforme à l'invention est caractérisé en ce que:

(b) un circuit de déphasage commandable (D) est relié aux entrées de pilotage des convertisseurs statiques, ce circuit étant adapté pour engendrer des signaux de pilotage ($sp$, $sa_1...sa_n$) permettant d'obtenir en sortie desdits convertisseurs des grandeurs électriques ayant:

d'une part, une fréquence commune (f) supérieure à la plus haute des fréquences des divers systèmes ($S_0$, $S_1...S_n$),

d'autre part, des phases relatives fonctions de signaux de commande reçus par ledit circuit de déphasage, en vue d'assurer le réglage des échanges d'énergie à travers lesdits convertisseurs,

(c) le réseau oscillant (OSC) est adapté pour pouvoir osciller à la fréquence commune (f) supérieure à celles des systèmes,

(d) des moyens de commande (MC) du circuit de déphasage, adaptés pour délivrer vers ledit circuit des signaux de commande ($sc_1$, $sc_2...sc_n$) fonctions des échanges d'énergie prescrits par le cahier des charges précité.

Ainsi, le dispositif conforme à l'invention possède un réseau oscillant à fréquence constante qui a un rôle de stockage temporaire d'énergie (par "stockage temporaire", on entend un stockage de durée au plus égale à celle de la la période du réseau oscillant, se caractérisant par un bilan énergétique équilibré sur la durée d'une période); l'échange d'énergie entre chaque convertisseur et ce réseau (et, en conséquence la fourniture ou l'absorption d'énergie par le système électrique correspondant) peut être ajusté même au voisinage de 0 par un réglage approprié des phases relatives des grandeurs de sortie dudit convertisseur (tension, courant): la puissance nulle est obtenue pour un déphasage de $\pi/2$ (quadrature), cependant que les valeurs extrémales absorbées ou fournies sont obtenues pour un déphasage de $\pi$ (opposition de phase) ou pour un déphasage nul.

Comme en le comprendra mieux plus loin, ces réglages sont réalisés en agissant sur les phases relatives des convertisseurs et peuvent notamment être assurés en prenant l'un des convertisseurs, dit convertisseur pilote, comme référence de phase et en réglant les phases des autres convertisseurs, dits convertisseurs asservis, par rapport à celui-ci.

On obtient de la sorte un système fonctionnant à une fréquence constante laquelle peut être ajustée à la valeur la plus appropriée, suffisante pour réduire la taille des éléments passifs du dispositif (transformateurs, filtres, etc...), mais compatible avec les limites technologiques des interrupteurs statiques constitutifs des convertisseurs (au niveau de puissance envisagé). En pratique, le circuit de déphasage qui conditionne cette fréquence de fonctionnement, possède une unité de référence apte à imposer une fréquence constante ajustable, supérieure à la plus haute des fréquences des systèmes électriques, par exemple 2 kilohertz pour des systèmes continus ou alternatifs 50, 60 ou 400 hz. Un tel fonctionnement à fréquence constante autorise des filtrages faciles (notamment filtrages de puissance, filtrages radioélectriques) en raison de la parfaite détermination des raies du spectre.

Outre l'échange entre les systèmes électriques précités, le dispositif de l'invention permet, le cas échéant, d'effectuer un transfert d'énergie vers une ou plusieurs charges réceptrices; un convertisseur statique non pilotable est alors interposé entre chacune de ces charges et le réseau oscillant. Cette ou ces charges peuvent être imposées par l'application (laquelle exige une gestion de l'énergie délivrée vers celles-ci) ou, au contraire, peuvent être prévues dans le cadre de l'invention pour assurer l'équilibre du bilan des échanges énergétiques entre le réseau oscillant et les divers systèmes électriques dans le cas d'échanges non équilibrés entre ces systèmes électriques; dans ce dernier cas, la charge prévue est adaptée pour absorber les excédents d'énergie.

Le dispositif de l'invention est applicable de façon large, quels que soient le nombre de systèmes électriques à gérer et éventuellement le nombre de charges réceptrices. Il peut notamment être utilisé dans les applications très courantes suivantes:

réglage des échanges d'énergie entre deux sources de tension continue réversibles en courant, les convertisseurs étant au nombre de deux et constitués par des onduleurs de tension,

réglage des échanges d'énergie entre deux sources de tension continue réversibles en courant et une charge réceptrice continue (par exemple, source continue fonctionnant constamment en récepteur), les deux convertisseurs pilotables associés aux sources reversibles en courant étant des onduleurs de tension et le convertisseur non pilotable associé à la charge étant un redresseur à diodes.

réglage des échanges d'énergie entre une source de tension continue réversible en courant et un dipole réversible en tension et/ou en courant en vue de réaliser un générateur de puissance dont les formes d'ondes sont programmables ou bien une alimentation quatre quadrants d'une machine à courant continu,

rélage des échanges d'énergie entre une source de tension continue réversible en courant et un système monophasé ou polyphasé.

L'invention sera mieux comprise à la lecture de la description qui suit et à l'examen des dessins annexés qui en présentent, d'une part, un schéme général et des diagrammes illustrant son fonctionnement, d'autre part, plusieurs modes de réalisation avec des diagrammes associés; sur ces dessins qui font partie intégrante de la présente description:

la figure 1 est un schéma bloc (en représentation unifilaire) d'un dispositif conforme à l'invention dans une forme générale,

les figures 2a, 2b, 3a, 3b, 4a, 4b et 5a, 5b sont des diagrammes temporels illustrant le fonctionnement dudit dispositif,

la figure 6 est un schéma électrique d'un premier mode de réalisation,

les figures 7a, 7b, 7c, 7d, 7e, 7f sont des diagrammes illustrant le fonctionnement des étages de commande de ce mode de réalisation et les figures 8a, 8b et 8c des diagrammes illustrant le fonctionnement des étages de puissance,

la figure 9 est une représentation symbolique des échanges possibles dans ce mode de réalisation,

les figures 10, 12 et 14 sont des schémas électriques de variantes du premier mode de réalisation, cependant que les figures 11, 13 et 15 sont des représentations symboliques des échanges possibles, respectivement dans chacune de ces variantes,

les figures 16 et 17 sont des schémas électriques d'un deuxième mode de réalisation et d'une variante,

les figures 18, 19 et 20 sont des schémas électriques d'autres modes de réalisation.

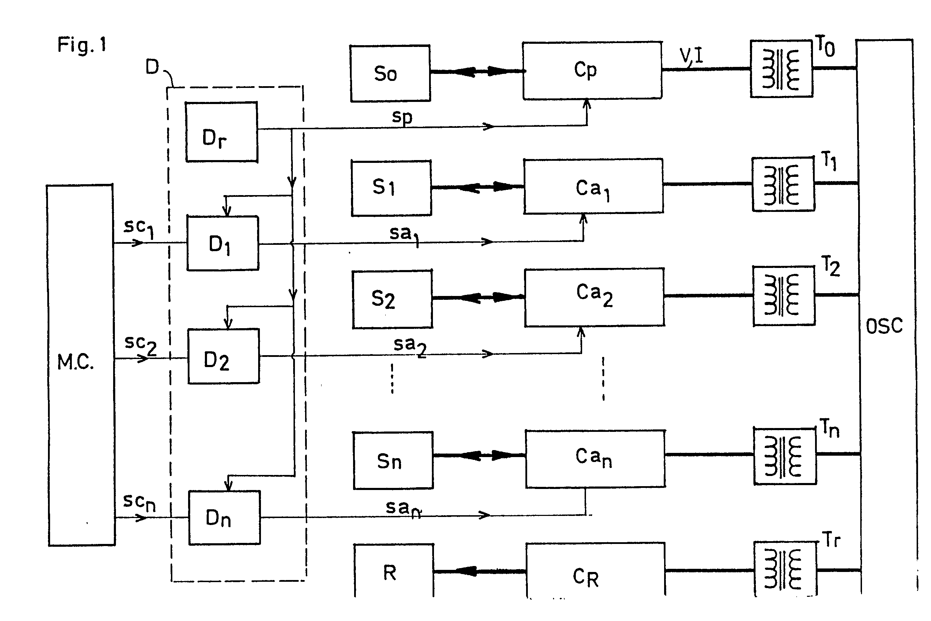

Le dispositif représenté à la figure 1 est destiné à gérer les échanges d'énergie entre $n+1$ systèmes électriques, générateur et/ou récepteur, $S_0$, $S_1...S_n$ et une charge réceptrice R. Le bilan des puissances moyennes échangées entre ces systèmes et la charge est supposé équilibré: cet équilibre peut provenir du cahier des charges lui-même (la gestion étant à faire entre les $n+2$ éléments qui sont imposés par l'application) ou peut être obtenu par la mise en place de la charge R (la gestion étant à faire entre les $n+1$ systèmes électriques).

Par exemple, $S_0$ peut être constitué par le réseau triphasé de distribution électrique national (380 volts/50 hertz), $S_1$ peut être une batterie d'accumulateurs (continue), $S_2$ un moteur électrique réversible à freinage récupératif (moteur de levage) et R une charge continue ajoutée pour absorber les éventuels excédents d'énergie. Ce système correspond à une alimentation sans coupure d'un ascenseur et vise à gérer les échanges pour assurer le fonctionnement en toute sécurité tout en optimisant la consommation d'énergie sur le réseau $S_0$.

Le dispositif comprend $n+1$ convertisseurs statiques pilotables Cp, Ca$_1$, Ca$_2$...Ca$_n$, composés chacun d'interrupteurs statiques à semi-conducteurs dont au moins un commandable. Les interrupteurs statiques de chaque convertisseur sont éventuellement associés à des circuits d'aide à la commutation (classiques en eux-mêmes) qui ont pour rôle d'améliorer les conditions de commutation des interrupteurs; chaque interrupteur statique commandable est doté d'un circuit de blocage et/ou amorçage apte à commuter l'interrupteur en fonction d'un signal de pilotage reçu par le convertisseur. Ces convertisseurs peuvent être de plusieurs types bien connus en eux-mêmes (redresseur, onduleur de tension...).

Chaque convertisseur pilotable $C_p$, $Ca_1...Ca_n$ est associé à un des systèmes électriques $S_0$, $S_1,...S_n$ et est apte à assurer une conversion d'énergie électrique continue ou basse fréquence en une énergie de fréquence plus élevée; en pratique, en raison d'impératifs technologiques, cette fréquence élevée supérieure à la plus haute des fréquences des systèmes électriques sera fonction de la puissance à échanger: par exemple, elle sera de l'ordre de quelques kilohertz pour des puissances de l'ordre de quelques centaines de kilowatts, de quelques dizaines de kilohertz pour des puissances de quelques dizaines de kilowatts et éventuellement de valeur encore plus élevée pour des puissances plus faibles.

En outre, le charge R est associée à un convertisseur non pilotable $C_R$, généralement un redresseur à diodes, apte à fonctionner à la fréquence élevée précitée.

Les divers convertisseurs $C_p$, $Ca_1$, $Ca_2...Ca_n$, $C_R$ sont connectés à un réseau oscillant OSC, en l'exemple par l'entremise de transformateurs $T_o$, $T_1$, $T_2...T_n$, $T_r$ aptes à assurer une adaptation d'impédance et un isolement galvanique. Ces transformateurs bénéficient de la réduction de taille et poids, liée à leur fonctionnement à fréquence élevée. Certains transformateurs ayant une fonction redondante peuvent le cas échéant être supprimés. Chaque transformateur peut être complexe et en particulier comporter un ou plusieurs enroulements primaires et/ou secondaires, couplés ou non.

Dans sa forme la plus simple, le réseau oscillant OSC est constitué par un réseau d'inductances éventuellement couplées, et de condensateurs, apte à osciller à la fréquence élevée précitée et à assurer un stockage temporaire d'énergie à l'échelle de sa période d'oscillation.

Les convertisseurs $C_p$, $Ca_1,...Ca_n$ sont pilotés par un circuit de déphasage commandable D qui délivre vers chacun de ceux-ci des signaux de pilotage sp, $sa_1...sa_n$ permettant d'obtenir en sortie desdits convertisseurs des grandeurs électriques (V, I) dont la fréquence est commune et égale à la valeur élevée précitée et dont les phases relatives sont fonctions de signaux de commande reçus par ledit circuit de déphasage.

Ce circuit de déphasage D est commandé par des moyens de commande MC, adaptés pour délivrer vers ledit circuit des signaux de commande $sc_1$, $sc_2...sc_n$ fonctions des échanges d'énergie prescrits par le cahier des charges.

Le circuit de déphasage D peut en particulier comprendre:

une unité de référence $D_r$ reliée à l'entrée de pilotage de l'un des convertisseurs, dit convertisseur pilote $C_p$, en vue de fournir une référence de phase et d'imposer la fréquence commune élevée précitée,

une unité de réglage de phases, composée en particulier de n déphaseurs $D_1$, $D_2...D_n$, chacun associé à un convertisseur asservi $Ca_1$, $Ca_2...Ca_n$ et relié à l'entrée de pilotage de celui-ci, en vue d'imposer à la sortie des convertisseurs asservis $Ca_1...Ca_n$ des déphasages par rapport au convertisseur pilote $C_p$, fonctions des signaux de commande $sc_1$, $sc_2...sc_n$.

L'unité de référence $D_r$ peut être constituée par un oscillateur de fréquence ajustable, permettant de régler à la valeur élevée souhaitée la fréquence commune de fonctionnement des convertisseurs et du réseau oscillant.

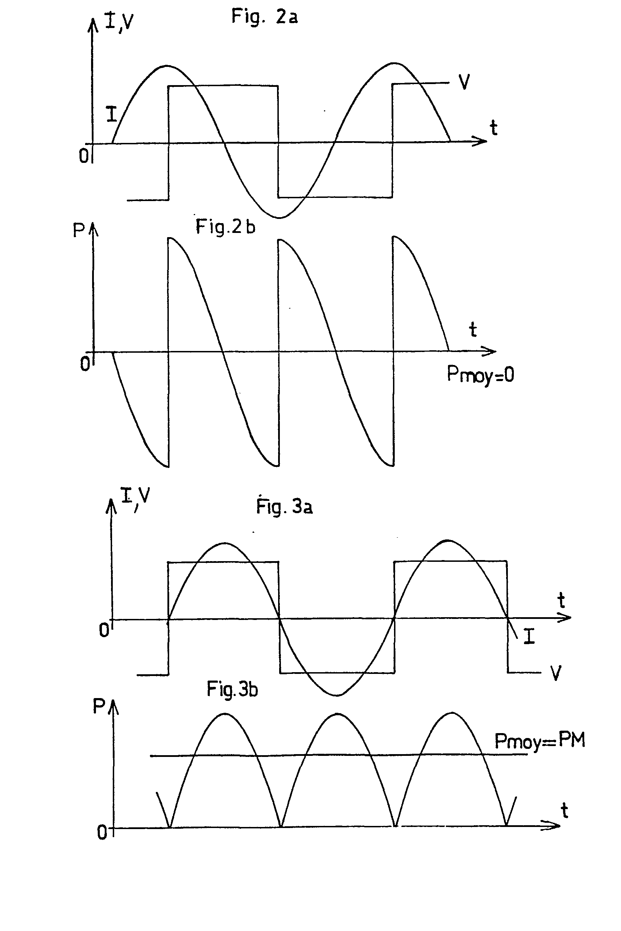

Pour illustrer le fonctionnement du dispositif, on a représenté aux figures 2a, 3a, 4a, 5a les grandeurs de sortie (tension V, courant I) d'un convertisseur pilotable quelconque, en se plaçant dans l'hypothèse la plus courante où les systèmes électriques correspondants sont des sources de tension continues ou de fréquence faible par rapport à la fréquence élevée imposée au réseau oscillant.

La tension de sortie V du convertisseur considéré est un signal rectangulaire (s'il est connecte à un système électrique continu) ou modulé en amplitude à basse fréquence (s'il est connecté à un système électrique basse fréquence). Le courant de sortie I dudit convertisseur possède une fréquence égale à la fréquence élevée précitée et présente une allure sinusoïdale dans l'exemple précité d'un réseau oscillant composé d'inductances et de condensateurs.

On a représenté aux figures 2b, 3b, 4b et 5b la puissance instantanée P (VI) et la puissance moyenne Pmoy échangées par le convertisseur considéré.

A la figure 2a, est illustré le cas d'un convertisseur dont les grandeurs de sortie sont en quadrature de phase. La puissance moyenne échangée entre le convertisseur considéré et le réseau oscillant (et donc la puissance échangée par le système électrique correspondant) est alors nulle, comme l'illustre la figure 2b.

La figure 3a montre le cas d'un convertisseur dont les grandeurs de sortie sont en phase; le système électrique correspondant fournit alors une puissance moyenne maximale $P_M$ au réseau oscillant comme l'illustre la figure 3b.

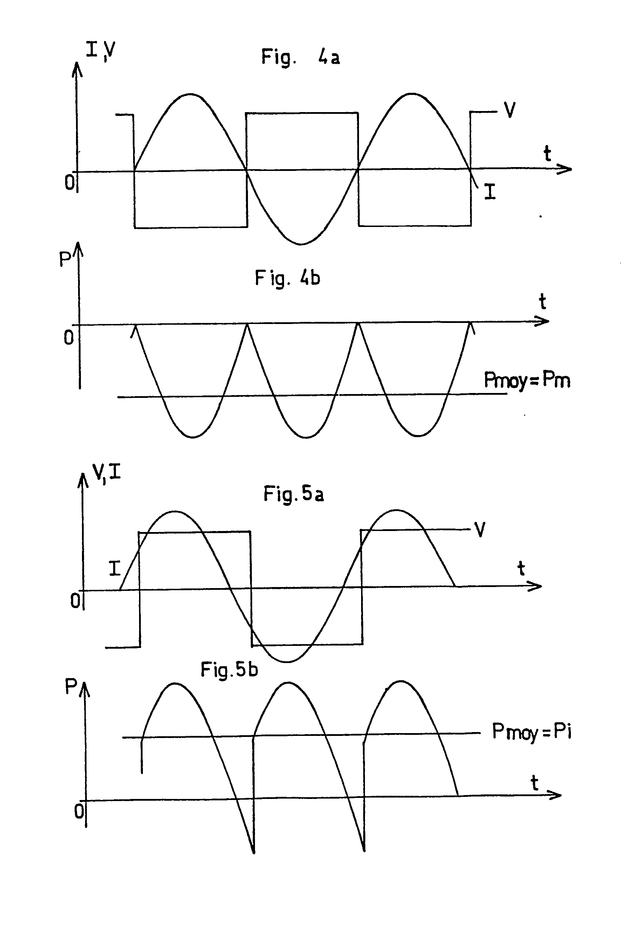

La figure 4a montre le cas d'un convertisseur dont les grandeurs de sortie sont en opposition de phase; le réseau oscillant fournit alors au système électrique une puissance moyenne maximale $|P_m|$ comme l'illustre la figure 4b.

La figure 5a montre un cas intermédiaire dans lequel le système électrique fournit une puissance moyenne intermédiaire $P_i$ au réseau oscillant comme l'illustre la figure 5b.

Le déphasage entre la tension V et le courant I de sortie de chaque convertisseur asservi $Ca_i$ est obtenu en réglant le déphasage relatif en tension dudit convertisseur asservi par rapport au convertisseur pilote $C_p$ grâce au signal de pilotage $sa_i$ délivré vers ledit convertisseur par le déphaseur correspondant $D_i$.

A chaque instant, les signaux de commande $sc_1$, $sc_2...sc_n$ issus des moyens MC permettent ainsi d'ajuster la puissance moyenne échangée par chaque système dans la plage $(P_m, O, P_M)$ ci-dessus définie. Ces signaux de commande peuvent être préprogrammés pour obtenir des cycles d'échanges souhaités; dans de nombreuses applications, les moyens de commande MC seront reliés à des capteurs afin d'asservir les échanges à des paramètres ou événements externes.

Dans la description qui suit, on gardera des références identiques à celles de la figure 1 pour les blocs qui se correspondant.

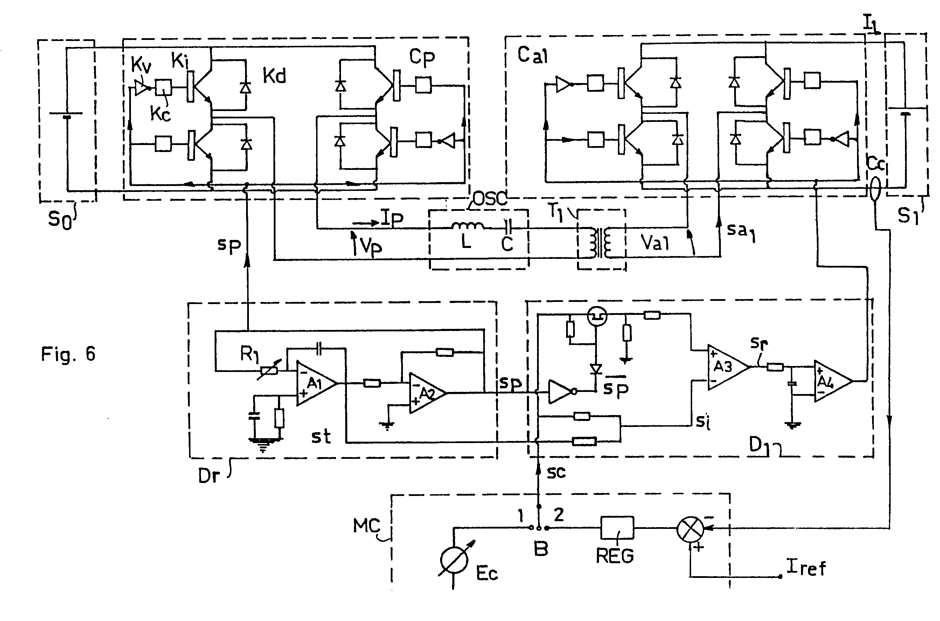

La figure 6 représente un dispositif du type ci-dessus décrit, pour le réglage des échanges d'énergie entre deux systèmes électriques constitués par des sources de tension continue réversibles en courant $S_0$ et $S_1$.

A la source $S_0$, est associé un convertisseur pilote $C_p$ et à la source $S_1$ un convertisseur asservi $Ca_1$; ces convertisseurs sont des onduleurs de tension ayant le même nombre de phases.

L'onduleur pilote $C_p$ est piloté par un oscillateur $D_r$ ayant une fréquence ajustable, cependant que l'onduleur asservi $Ca_1$ est piloté par un déphaseur $D_1$ prenant sa référence sur l'oscillateur $D_r$ en vue d'imposer à cet onduleur asservi une fréquence f identique à celle de l'onduleur pilote et un déphasage déterminé.

Les deux onduleurs $C_p$ et $Ca_1$ sont interconnectés par un réseau oscillant OSC, constitué par un circuit oscillant LC série ayant une fréquence de résonance du même ordre de grandeur que la fréquence f des onduleurs; un transformateur $T_1$ assure l'isolement galvanique entre les deux sources.

Un générateur de tension de commande MC est relié au déphaseur $D_1$ en vue de lui fournir une tension de commande sc fonction des échanges de puissance souhaités entre les deux sources $S_0$ et $S_1$.

Dans l'application particulière visée, chaque onduleur $C_p$ ou $Ca_1$ est monophasé et possède au moins une paire d'interrupteurs statiques commandables à semiconducteurs. En l'exemple de la figure 6, chacun des onduleurs $C_p$ et $Ca_1$ est constitué de quatre interrupteurs statiques identiques tels que $K_i$, montés en pont; chaque interrupteur $K_i$ est disposé en anti-parallèle avec une diode $K_i$ et est un interrupteur de synthèse apte à présenter un amorçage spontané sous tension voisine de 0 et un blocage commandé; en particulier chaque interrupteur de synthèse $K_i$ peut être constitué par un transistor de puissance doté d'une interface de pilotage approprié $K_c$ (cette interface peut notamment être du type de celle décrite dans la demande de brevet fraçaise n° 84.07708). Cette interface $K_c$ reçoit le signal de pilotage sp ou $sa_1$, soit directement pour les interrupteurs d'une diagonale, soit par l'intermédiaire d'un inverseur $K_v$ pour les interrupteurs de l'autre diagonale.

Les caractéristiques du circuit oscillant OSC sont prévues de façon que la fréquence de résonance fr de celui-ci soit inférieure à la fréquence commune f de l'oscillateur $D_r$ et des onduleurs $C_p$ et $Ca_1$. Le choix de ces valeurs relatives assure les conditions de commutation naturelle des interrupteurs $K_i$ dotés de leur interface de pilotage $K_c$

(amorçage spontané sous tension voisine de 0 et blocage commandé).

L'oscillateur $D_r$ représenté est réalisé à partir d'un système bouclé classique à amplificateurs opérationnels $A_1$, $A_2$; la fréquence de cet oscillateur est adjustable par variation d'une résistance $R_1$.

Le déphaseur $D_1$ est un déphaseur à amplificateurs opérationnels $A_3$, $A_4$ de type classique, adapté pour délivrer un signal de pilotage $sa_1$ dont le déphasage par rapport au signal de pilotage sp soit compris entre $\pi/2$ et $3\pi/2$.

Le générateur de commande MC est adapté à chaque application et comprend, en l'exemple représenté:

d'une part, un générateur de tension de commande variable EC qui permet, lorsqu'il se trouve connecté par l'interrupteur B, d'assurer un réglage des échanges "en boucle ouverte" selon un programme déterminé,

d'autre part, un circuit d'asservissement équipé d'un capteur $C_c$ du courant traversant la source $S_1$ qui permet, lorsqu'il est connecté, de contrôler les échanges de puissance par asservissement du courant $I_1$ de la source $S_1$ à une valeur de référence Iref.

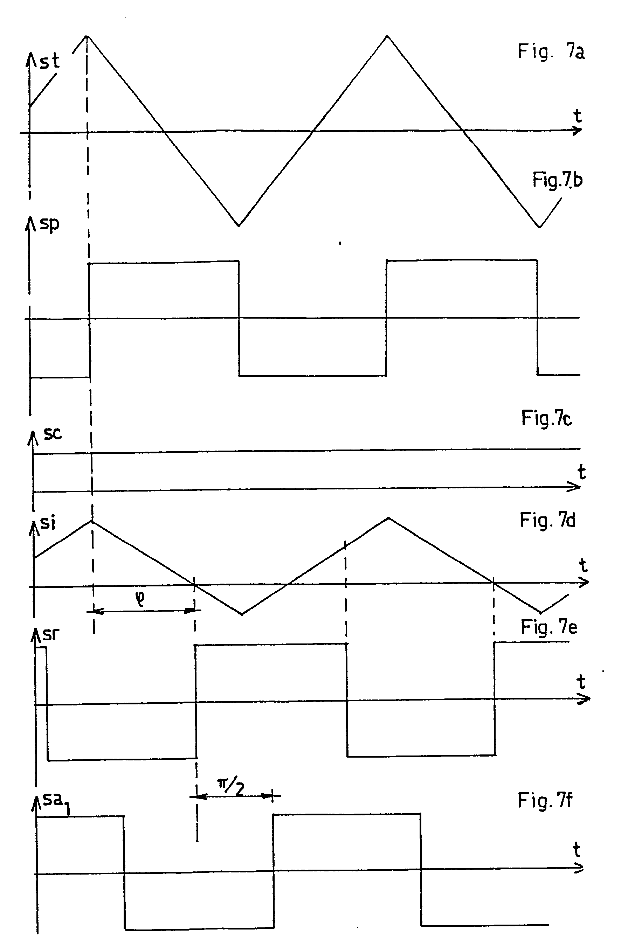

Les figures 7a, 7b, 7c, 7d, 7e, 7f illustrent l'allure de signaux en différents points de l'étage de commande $D_r$, $D_1$, HC du dispositif de la figure 6.

Les figures 7a et 7b représentent respectivement les signaux st et sp à la sortie des amplificateurs $A_1$ et $A_2$ de l'oscillateur $D_r$.

La figure 7c illustre le signal de commande sc délivré à la sortie du générateur MC.

La figure 7d illustre un signal intermédiaire $s_i$, demi-somme su signal de commande sc et du signal st.

La figure 7e représente le signal $s_r$ en sortie de l'amplificateur $A_3$; ce signal est le résultat de la comparaison entre le signal intermédiaire $s_i$ et:

soit le signal sc si sp est négatif,

soit 0 si sp est positif.

On obtient ainsi un signal $s_r$ déphasé par rapport à sp d'un angle $\varphi$ compris entre 0 et $\pi$, fonction du signal de commande sc.

L'amplificateur $A_4$ introduit un déphasage constant supplémentaire de $\pi/2$.

Le signal de pilotage $sa_1$ issu du déphaseur $D_1$ est illustré à la figure 7f.

Il est à remarquer que le signal de pilotage sp est exclusivement porteur d'une information de fréquence, cependant que le signal de pilotage $sa_1$ est exclusivement porteur d'une information de fréquence (identique à la précédente) et d'une information de phase relative par rapport au signal précédent.

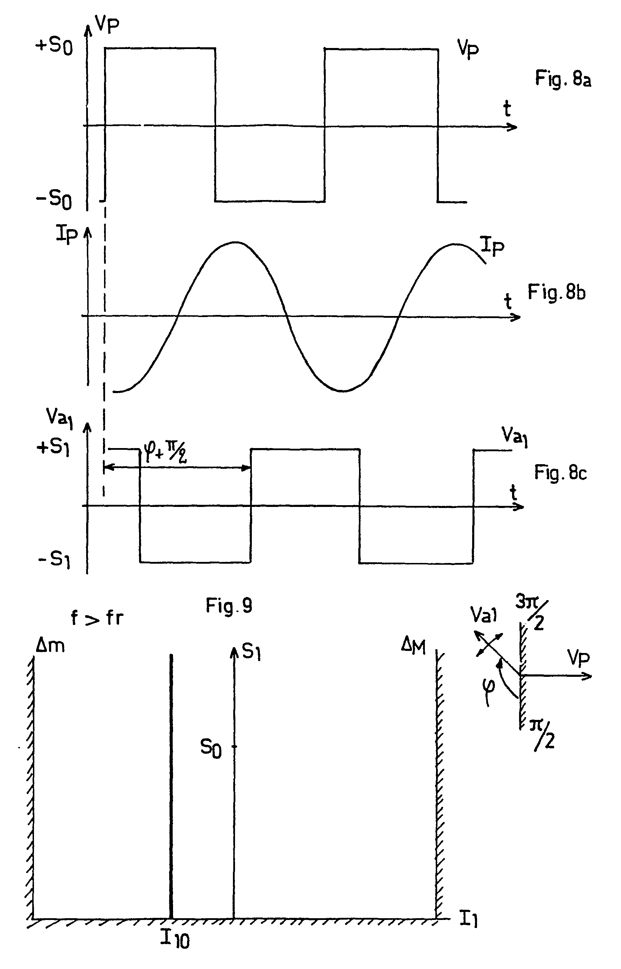

Les figures 8a, 8b, 8c illustrent l'allure des signaux $V_p$, $I_p$ et $Va_1$, constituent respectivement la tension de sortie de l'onduleur $C_p$, le courant traversant le réseau oscillant OSC et la tension de sortie de l'onduleur $Ca_1$.

Les tensions $V_p$ et $Va_1$ sont des tensions rectangulaires de fréquence égale à la fréquence de l'oscillateur $D_r$ et d'amplitude imposée respectivement par la source $S_0$ ou par la source $S_1$ (afin

de simplifier les notations, le signes $S_0$ ou $S_1$ désigneront également la tension aux bornes de la source correspondante).

Le courant $I_p$ est un courant pseudosinusoidal déphasé respectivement en arrière par rapport à $V_p$ et en avant par rapport à $Va_1$, ce qui fournit les conditions de commutation naturelle des interrupteurs statiques $K_i$ composant les onduleurs $C_p$ et $Ca_1$.

L'échange de puissance est conditionné par le déphasage entre les tensions $V_p$ et $Va_1$, et à fréquence constante, uniquement par ce déphasage lequel est imposé par les signaux de pilotage sp et $sa_1$ en fonction de la commande sc.

La Figure 9 est une représentation symbolique des échanges de puissance possibles entre les sources $S_0$ et $S_1$. L'ensemble des points de fonctionnement possibles $(S_1, I_1)$ est défini par un demi-plan $S_1 > 0$, limité par deux droites $\Delta M$ et $\Delta m$ correspondants aux courants maximum et minimum (algébrique) dans la source $S_1$. Dans ce type de montage fonctionnant à fréquence fixe, le courant $I_1$ ne dépend que du déphasage entre les onduleurs (à tension $S_0$ constante). Pour un déphasage donné, lorsque la tension $S_1$ varie, le point de fonctionnement $S_1$, $I_1$ se déplace sur une droite parallèle à l'axe des ordonnées, d'abcisse $I_{10}$. On a porté sur la figure 9 une représentation vectorielle montrant le déphasage possible dans le montage concerné entre la tension $V_p$ et la tension $Va_1$. Lorsque ce déphasage varie entre $\pi/2$ et $3\pi/2$, la puissance échangée par la source $S_1$ varie de façon continue entre deux valeurs extrémales, positive et négative.

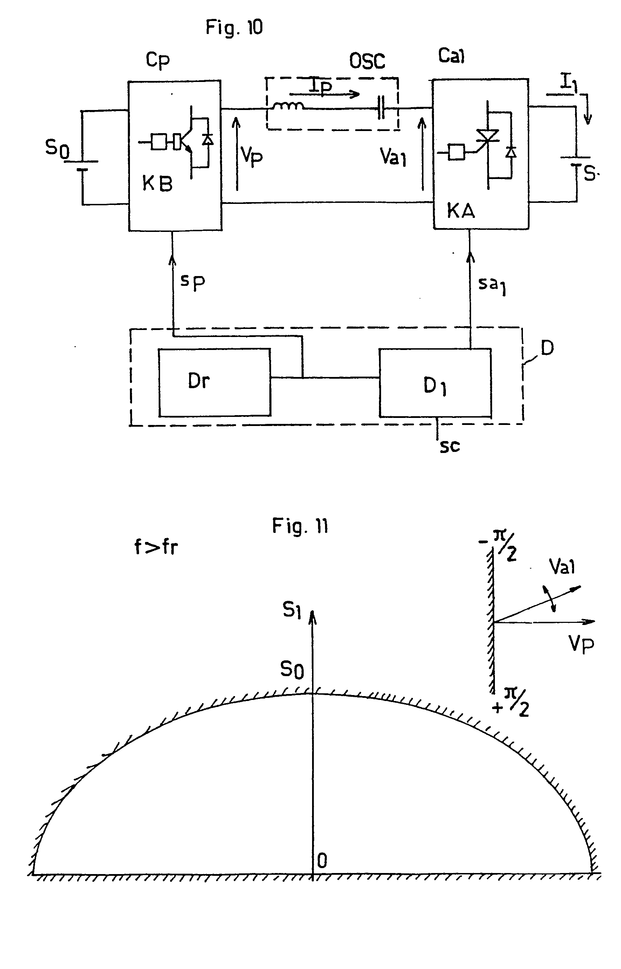

La figure 10 représente une variante du dispositif précédent; dans cette variante, l'échange d'énergie est à effectuer entre une source $S_0$ et une source continue $S_1$ présentant une tension inférieure à la source continue $S_0$.

Le circuit oscillant OSC possède comme précédemment une fréquence de résonance fr inférieure à la fréquence f des onduleurs.

Le déphaseur $D_1$ est adapté pour introduire un déphasage compris entre $-\pi/2$ et $+\pi/2$; il suffit à cet effet de disposer un inverseur à la sortie du déphaseur déjà décrit.

L'onduleur pilote $C_p$ est associé à la source de tension la plus élevée $S_0$ et est composé d'au moins une paire d'interrupteurs statiques commandables à semiconducteurs, en particulier de quatre interrupteurs montés comme précédemment en pont. Comme précédemment, chaque interrupteur est disposé en anti-parallèle avec une diode et est du type apte à présenter un amorçage spontané pour une tension voisine de 0 et un blocage commandé.

L'onduleur asservi $Ca_1$ est associé à la source de tension la plus basse $S_1$ et présente une même structure que ci-dessus évoquée, à l'exception de la nature des interrupteurs qui sont dans ce cas du type apte à présenter un blocage spontané pour un courant voisin de 0 et un amorçage commandé (par exemple thyristor).

Pour donner une représentation plus synthétique des onduleurs, on a symbolisé ceux-ci par un bloc avec à l'intérieur le type d'interrupteur qui le compose: interrupteur désigné par KA lorsqu'il est commandable à l'amorçage (type thyristor) et par KB lorsqu'il est commandable au blocage (type transistor à interface de pilotage appropriée).

Les signaux obtenus sont analogues à ceux représentés aux figures 7a à 7f et 8a à 8c.

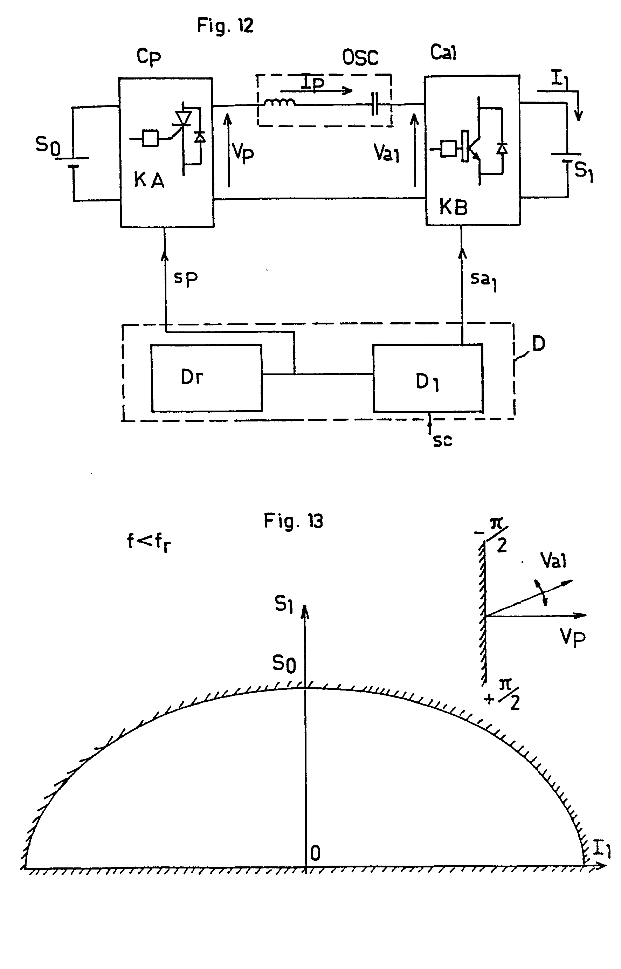

La figure 11 est une représentation symbolique, pour cette variante, de l'ensemble des points de fonctionnement dans le plan $S_1$, $I_1$. Ceux-ci sont compris dans un demi-plan $S_1 > 0$, limité par une ellipse représentant les limites de commutation de l'onduleur $Ca_1$.

La figure 12 représente une autre variante, permettant un réglage des échanges d'énergie entre une source de tension continue $S_0$ et une source de tension continue $S_1$ présentant une tension inférieure à la source de tension $S_0$.

Dans cette variante, le circuit OSC possède une fréquence de résonance fr supérieure à la fréquence f des onduleurs.

Le déphaseur $D_1$ est adapté pour introduire un déphasage compris entre $-\pi/2$ et $+\pi/2$.

L'onduleur pilote $C_p$ est associé à la source de tension la plus élevée $S_0$ et est composé d'interrupteurs statiques du type KA défini précédemment.

L'onduleur asservi $Ca_1$ est associé à la source de tension la plus basse $S_1$ et est composé d'interrupteurs statiques du type KB.

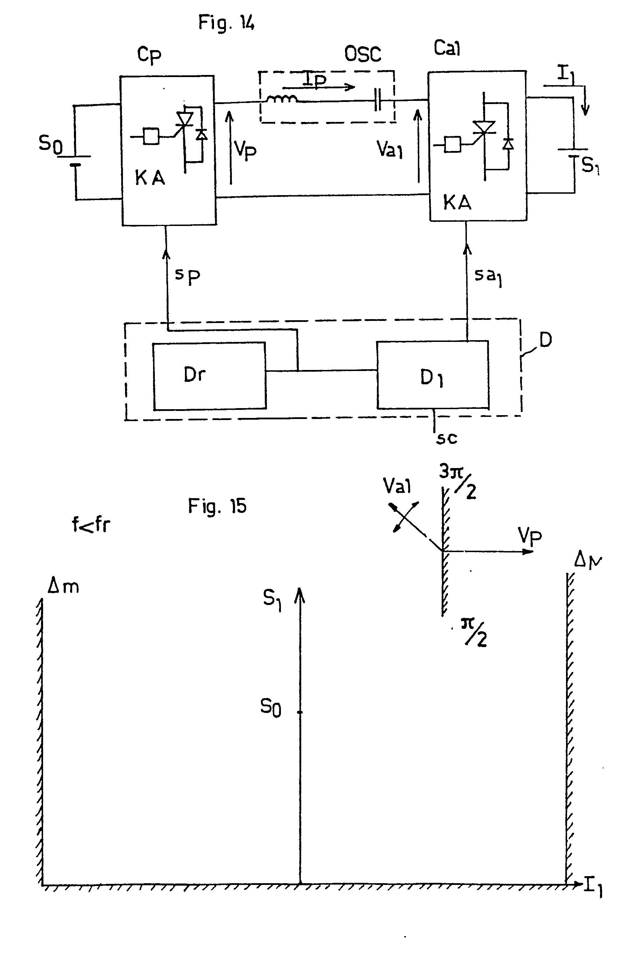

La représentation symbolique de l'ensemble des points de fonctionnement (figure 13) est identique à la précédente.

La figure 14 est un schéma d'une autre variante, dans laquelle:

le circuit oscillant OSC possède une fréquence de résonance fr supérieure à la fréquence f des onduleurs,

le déphaseur $D_1$ est apte à introduire un déphassage entre la tension de sortie de l'onduleur pilote $C_p$ et la tension de sortie de l'onduleur asservi $Ca_1$ compris entre $+\pi/2$ et $+3\pi/2$,

l'onduleur pilote $C_p$ et l'onduleur asservi $Ca_1$ sont identiques et du type KA.

La représentation symbolique de l'ensemble des points de fonctionnement (figure 15) est identique à celle de la figure 9.

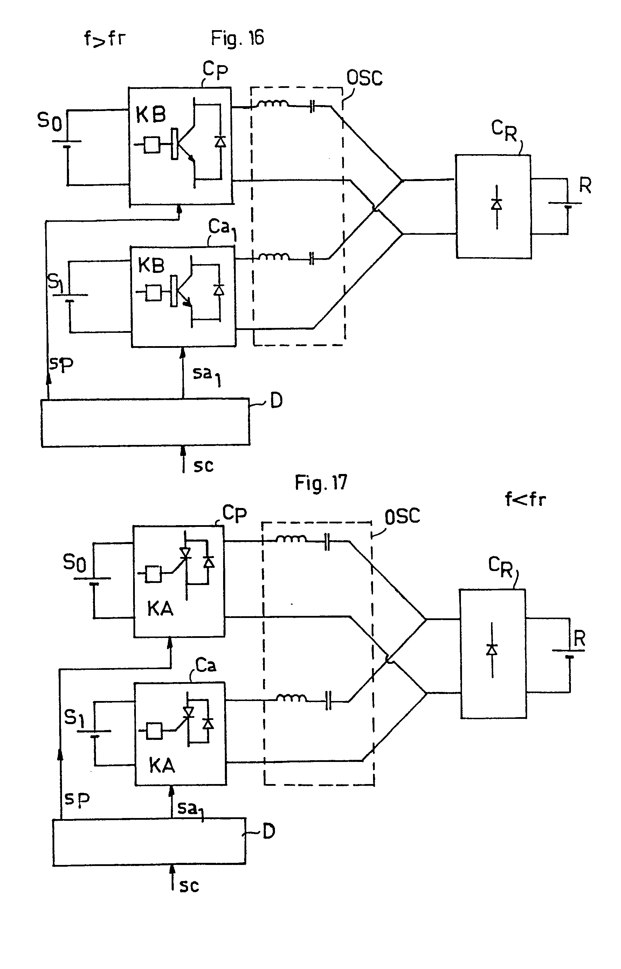

Les figures 16 et 17 représentent respectivement un autre mode de réalisation de l'invention et une variante, permettant de régler les échanges d'énergie entre deux sources de tension continues réversibles en courant $S_0$ et $S_1$ et une charge réceptrice continue R. Ces montages se caractérisent par:

deux onduleurs de tension $C_p$ et $Ca_1$ ayant le même nombre de phases (monophasés en l'exemple), chacun associé à l'une des sources de tension $S_0$, $S_1$.

un oscillateur $D_r$ du type déjà décrit, délivrant un signal périodique sp sur l'entrée de pilotage de l'onduleur $C_p$, et un déphaseur $D_1$ du type déjà décrit, apte à délivrer un signal $sa_1$ semblable au précédent sp et déphasé entre 0 et $\pi$ par rapport à celui-ci,

un réseau oscillant OSC constitué par deux circuits oscillants LC série, connectés chacun à un des onduleurs $C_p$, $Ca_1$,

un générateur de tension MC analogue au précédent,

un redresseur à diodes monophasé $C_R$, associé à la charge réceptrice R.

Dans le cas d'un montage polyphasé, le redresseur $C_R$ présente en entrée le même nombre de phases que les onduleurs, chaque phase du redresseur étant montée en étoile avec les circuits oscillants LC connectés sur les phases homologues des deux onduleurs.

Dans le cas de la figure 16, chaque circuit oscillant LC du réseau OSC présente une fréquence de résonance fr inférieure à la fréquence f des onduleurs; ces derniers sont alors tous deux constitués d'interrupteurs du type KB.

Dans le cas de la figure 17, chaque circuit oscillant LC du réseau OSC présente une fréquence de résonance fr supérieure à la fréquence f des onduleurs; ces derniers sont alors tous deux constitués d'interrupteurs du type KA.

Dans les deux cas, le déphaseur $D_1$ permet de faire varier de façon continue le déphasage sur 180° et, en conséquence, la puissance absorbée par la charge réceptrice R entre 0 et une valeur maximale.

Les deux sources $S_0$ et $S_1$ peuvent être identiques, auquel cas les circuits oscillants LC associés aux onduleurs sont tous identiques entre eux.

A partir des montages monophasés qui ont été représentés à titre d'exemples, l'homme du métier est apte à réaliser des montages mettant en oeuvre des onduleurs polyphasés. L'oscillateur $D_r$ est alors adapté pour délivrer vers l'onduleur pilote n signaux périodiques sp de même fréquence, déphasés de $2\pi/n$ (n désignant le nombre de phases), cependant que le déphaseur $D_1$ est adapté pour délivrer vers l'onduleur assservi n signaux périodiques $sa_1$ de même fréquence, chacun présentant le déphasage imposé par le signal de commande sc par rapport au signal sp de la phase homologue.

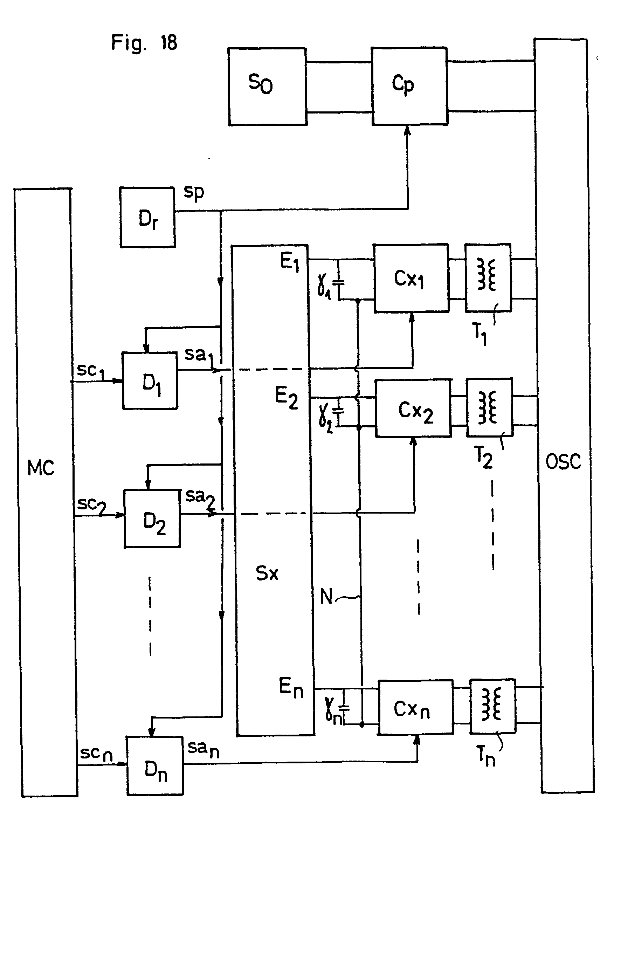

Par ailleurs, le dispositif représenté à la figure 18 est destiné à gérer les échanges d'énergie entre deux systèmes électriques constitués d'une part d'une source de tension continue réversible en courant $S_0$ et d'autre part d'un système électrique complexe $S_x$ générateur et/ou récepteur à n entrées $E_1$, $E_2...E_n$.

La nature du système électrique $S_x$ conditionne la fonction réalisée par un tel dispositif, la source de tension réversible en courant $S_0$ étant, par exemple, une batterie d'accumulateurs.

Dans un exemple très courant, le système $S_x$ est un dipôle actif ou passif, réversible en tension et/ou en courant. Le dispositif précité constitue alors un générateur de puissance capable d'imposer à ce dipôle une forme d'onde quelconque de tension ou de courant, continue ou alternative, à partir de la source continue qu'est la batterie.

Si le dipôle précité est une machine à courant continu, le dispositif de réglage de puissance envisagé est alors un variateur de vitesse capable de faire fonctionner ladite machine dans les quatre quadrants.

Ce dispositif peut aussi par exemple être utilisé en vue de reconstituer un réseau monophasé ou polyphasé toujours à partir d'une batterie (groupe de secours). Cette liste des applications potentielles du dispositif envisagé illustrent l'intérêt dudit dispositif et n'est pas limitative.

Le dispositif comprend n+1 convertisseurs pilotables $C_p$, $Cx_1...Cx_n$ qui sont des onduleurs de tension en l'exemple monophasés. Le convertisseur pilote $C_p$ est associé à la source $S_0$ tandis que trous les convertisseurs asservis $Cx_1...Cx_n$ sont associés au système électrique $S_x$ à n entrées.

Chacun des onduleurs asservis $Cx_1...Cx_n$ est, côté alternatif, connecté à un transformateur $T_1...T_n$ et, côté continu, fermé sur un condensateur $Y_1...Y_n$. Ces n onduleurs asservis $Cx_1...Cx_n$ sont, côté continu, couplés en étoile et connectés au système $S_x$ de telle façon que chacun desdits onduleurs asservis possède l'une de ses bornes continues connectée au noeud N de l'étoile et l'autre borne continue reliée à une entrée $E_1...E_n$ du système $S_x$.

L'onduleur pilote $C_p$ est piloté par un oscillateur $D_r$ du type déjà décrit ayant une fréquence adjustable cependant que chacun des conduleurs asservis $Cx_1$ est piloté par un dépasseur $D_1$ du type déjà décrit, prenant sa référence sur l'oscillateur $D_r$ en vue d'imposer à cet onduleur asservi une fréquence f identique à celle de l'onduleur pilote et un déphasage déterminé (signaux de pilotage déjà évoqués: $sa_1...sa_n$).

L'onduleur pilote $C_p$ est en l'exemple relié directement au réseau oscillant OSC cependant que les onduleurs asservis $Cx_1...Cx_n$ sont reliés audit réseau oscillant OSC par l'entremise de transformateurs $T_1...T_n$: chacun de ces transformateurs a son enroulement primaire connecté à l'un des onduleurs précités, tandis que tous leurs enroulements secondaires sont connectés au réseau oscillant OSC.

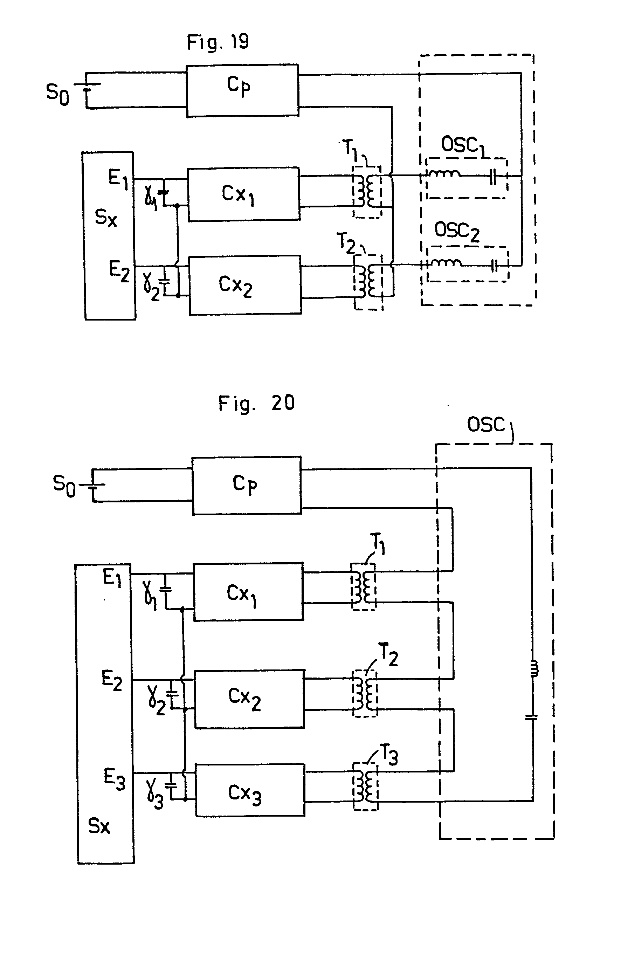

Le réseau oscillant OSC est constitué d'inductances et de condensateurs aptes à osciller à la fréquence élevée précitée et à assurer un stockage temporaire d'énergie. En particulier, le réseau oscillant peut être constitué par un circuit oscillant LC série connecté en série avec les n secondaires des transformateurs $T_1...T_n$ eux-mêmes interconnectés en série (figure 20). Ce réseau oscillant peut encore être constitué par n circuits oscillants LC série $OSC_1...OSC_n$, identiques; chacun de ces circuits oscillants est connecté en série avec l'enroulement secondaire d'un transformateur $T_1...T_n$ et est placé en parallèle sur l'onduleur pilote $C_p$ (figure 19).

Chacun des déphaseurs $D_1...D_n$ reçoit un signal de commande $sc_1...sc_n$ de l'unité de commande MC, fonction des échanges de puissance souhaités. Par exemple, cette unité de commande peut être constituée de n régulateurs permettant d'imposer les tensions entre les bornes continues de chaque onduleur asservi $Cx_1...Cx_n$.

Dans le dispositif représenté aux figures 18, 19 et 20, chacun des onduleurs $C_p$, $Cx_1...Cx_n$ est

monophasé et possède au moins une paire d'interrupteur statiques commandables à semi-conducteurs. Comme déjà évoqué précédemment, chacun de ces interrupteurs est disposé en antiparallèle avec une diode et peut être soit du type KA apte à présenter un blocage spontané pour un courant voisin de 0 et un amorçage commandé, soit du type KB apte à présenter un amorçage spontané sous une tension voisine et 0 et un blocage commandé. Le choix d'un interrupteur du type KA ou du type KB dépend essentiellement d'une part des valeurs relatives de la fréquence commune f et de la fréquence de résonance du (ou des) circuits oscillants LC série qui composent le réseau oscillant et, d'autre part, des plages de déphasages choisies.

Les figures 19 et 20 déjà évoquées représentent deux cas particuliers du dispositif comprenant respectivement deux convertisseurs asservis associés chacun à un circuit LC série ou trois convertisseurs asservis reliés en série à un circuit LC série unique. Ces montages peuvent par exemple être appliqués pour réaliser des groupes de secours monophasés pour le premier et triphasés pour le second.

**Revendications**

1. Dispositif de réglage des échanges d'énergie entre au moins deux systèmes électriques générateur et/ou récepteur ($S_0$, $S_1$...$S_n$) en vue de contrôler les puissances délivrées ou absorbées par lesdits systèmes selon un cahier des charges déterminé, ledit dispositif comprenant:

(a) associé à chaque système électrique, au moins un convertisseur statique d'énergie électrique ($C_p$, $Ca_1$...$Ca_n$) connecté audit système et possédant une entrée de pilotage pour recevoir un signal de pilotage, lesdits convertisseurs étant aptes à convertir les grandeurs électriques des divers systèmes en des grandeurs électriques de fréquences et de phases fonctions des signaux de pilotage,

(c) un réseau oscillant (OSC) connecté aux divers convertisseurs et apte à assurer un stockage temporaire d'énergie, ledit dispositif étant caractérisé en ce que:

(b) un circuit de déphasage commandable (D) est relié aux entrées de pilotage des convertisseurs statiques, ce circuit étant adapté pour engendrer des signaux de pilotage (sp, $sa_1$...$sa_n$) permettant d'obtenir en sortie desdits convertisseurs des grandeurs électriques ayant:

d'une part, une fréquence commune (f) supérieure à la plus haute des fréquences des divers systèmes ($S_0$, $S_1$...$S_n$),

d'autre part, des phases relatives fonctions de signaux de commande reçus par ledit circuit de déphasage, en vue d'assurer le réglage des échanges d'énergie à travers lesdits convertisseurs,

(c) le réseau oscillant (OSC) est adapté pour pouvoir osciller à la fréquence commune (f) supérieure à celles des systèmes,

(d) des moyens de commande (MC) du circuit de déphasage, adaptés pour délivrer vers ledit circuit des signaux de commande ($sc_1$, $sc_2$...$sc_n$) fonctions des échanges d'énergie prescrits par le cahier des charges précité.

2. Dispositif selon la revendication 1, caractérisé en ce que le circuit de déphasage (D) comprend:

une unité de référence ($D_r$) reliée à l'entrée de pilotage de l'un des convertisseurs ($C_p$) dit convertisseur pilote, en vue d'imposer la fréquence commune (f),

une unité de réglage de phases ($D_1$, $D_2$...$D_n$) reliée aux entrées de pilotage des autres convertisseurs ($Ca_1$...$Ca_n$) dits convertisseurs asservis, en vue d'imposer en sortie desdits convertisseurs asservis, des déphasages par rapport au convertisseur pilote, fonctions des signaux de commande ($sc_1$...$sc_n$).

3. Dispositif selon la revendication 2, caractérisé en ce que:

l'unité de référence ($D_r$) est adaptée pour engendrer un signal de pilotage (sp) exclusivement porteur d'une information de fréquence commune (f),

l'unité de réglage de phases ($D_1$...$D_n$) est adaptée pour engendrer des signaux de pilotage ($sa_1$...$sa_n$), chacun exclusivement porteur d'une information de fréquence commune et d'une information de phase relative.

4. Dispositif selon l'une des revendications 2 ou 3, caractérisé en ce que l'unité de référence ($D_r$) est adaptée pour imposer une fréquence commune supérieure à la plus haute des fréquences des divers systèmes ($S_0$, $S_1$...$S_n$).

5. Dispositif selon l'une des revendications 2, 3 ou 4, caractérisé en ce que:

l'unité de référence ($D_r$) comprend un oscillateur à fréquence ajustable, permettant de régler la fréquence commune précitée,

l'unité de réglage de phases comprend des déphaseurs ($D_1$, $D_2$...$D_n$) en nombre égal au nombre de convertisseurs asservis ($Ca_1$, $Ca_2$...$Ca_n$), chaque déphaseur étant associé à un convertisseur asservi.

6. Dispositif selon l'une des revendications 1, 2, 3, 4 ou 5, dans lequel le réseau oscillant (OSC) est constitué par un réseau d'inductances éventuellement couplées, et de condensateurs, apte à osciller à la fréquence commune précitée.

7. Dispositif selon l'une des revendications 1, 2, 3, 4, 5 ou 6, dans lequel les convertisseurs sont composés d'interrupteurs statiques à semiconducteurs, associés à des circuits d'aide à la commutation.

8. Dispositif selon la revendication 7, caractérisé en ce que les convertisseurs à semiconducteurs sont associés à des transformateurs ($T_0$, $T_1$...$T_n$) aptes à assurer une adaptation d'impédance et/ou un isolement galvanique.

9. Dispositif selon l'une des revendications 1, 2, 3, 4, 5, 6, 7 ou 8, dans lequel chacun des convertisseurs ($C_p$, $Ca_1$...$Ca_n$) comprend au moins un interrupteur statique commandable à semiconducteurs, doté d'un circuit de blocage et/ou amorçage apte à commuter l'interrupteur en fonction du signal de pilotage.

10. Dispositif selon l'une des revendications 1, 2, 3, 4, 5, 6, 7, 8 ou 9, permettant un transfert d'énergie vers au moins une charge réceptrice (R), caractérisé en ce qu'il comprend:

(e) connecté à chaque charge réceptrice (R), un convertisseur statique non pilotable ($C_R$) relié au réseau oscillant (OSC).

11. Dispositif selon l'une des revendications précédentes pour le réglage des échanges d'énergie entre deux sources de tension continue réversibles en courant ($S_n$, $S_1$), caractérisé en ce qu'il comprend:

(a) deux onduleurs de tension ($C_p$, $Ca_1$) ayant le même nombre de phases, chacun associé à l'une des sources de tension,

(b) un oscillateur ($D_r$) pilotant un des onduleurs ($C_p$), dit onduleur pilote, et un déphaseur ($D_1$) prenant sa référence sur ledit oscillateur et pilotant l'autre onduleur ($Ca_1$) dit onduleur asservi, en vue d'imposer à cet onduleur asservi une fréquence (f) identique à celle de l'onduleur pilote et un déphasage déterminé,

(c) un circuit oscillant LC série (OSC) par phase des onduleurs, interconnectant les phases homologues des deux onduleurs, ledit circuit ayant une fréquence de résonance (fr) de même ordre de grandeur que la fréquence (f) des onduleurs,

(d) un générateur de tension de commande (MC), relié au déphaseur ($D_1$) pour lui fournir une tension de commande ($sc_1$) fonction des échanges de puissance souhaités entre sources.

12. Dispositif selon la revendication 11, caractérisé en ce que le déphaseur ($D_1$) est apte à introduire un déphasage variant de manière continue sur 180° en vue d'autoriser une variation continue de la puissance fournie par l'une des sources (et donc absorbée par l'autre), comprise entre deux valeurs extrémales, positive ($P_M$) et négative ($P_m$).

13. Dispositif selon la revendication 12, caractérisé en ce que:

le circuit oscillant (OSC) possède une fréquence de résonance (fr) inférieure à la fréquence (f) des onduleurs,

le déphaseur ($D_1$) est apte à introduire un déphasage entre la tension de sortie de l'onduleur pilote ($C_p$) et la tension de sortie de l'onduleur asservi ($Ca_1$) compris entre $+\pi/2$ et $+3\pi/2$,

l'onduleur pilote et l'onduleur asservi sont chacun composés d'au moins une paire d'interrupteurs statiques commandables à semi-conducteurs ($K_l$), chaque interrupteur étant disposé en anti-parallèle avec une diode ($K_d$) et du type (KB) apte à présenter un amorçage spontané sous tension voisine de 0 et un blocage commandé.

14. Dispositif selon la revendication 12, pour le réglage des échanges d'énergie entre deux sources de tension continue ($S_0$, $S_1$) dont l'une ($S_1$) présente une tension inférieure à l'autre, caractérisé en ce que:

le circuit oscillant (OSC) possède une fréquence de résonance (fr) inférieure à la fréquence (f) des onduleurs,

le déphaseur ($D_1$) est apte à introduire un déphasage entre la tension de sortie de l'onduleur pilote ($C_p$) et la tension de sortie de l'onduleur asservi ($Ca_1$) compris entre $-\pi/2$ et $+\pi/2$,

l'onduleur pilote ($C_p$) est associé à la source ($S_0$) de tension la plus élevée et est composé d'au moins une paire d'interrupteurs statiques commandables à semiconducteurs, chaque interrupteur étant disposé en antiparallèle avec une diode et du type (KB) apte à présenter un amorçage spontané sous tension voisine de 0 et un blocage commandé,

l'onduleur asservi ($Ca_1$) est associé à la source ($S_1$) de tension la plus basse et est composé d'au moins une paire d'interrupteurs statiques commandables à semi-conducteur, chaque interrupteur étant disposé en anti-parallèle avec une diode et du type (KA) apte à présenter un blocage spontané pour un courant voisin de 0 et un amorçage commandé.

15. Dispositif selon la revendication 12, pour le réglage des échanges d'énergie entre deux sources de tension continue ($S_0$), ($S_1$) dont l'une ($S_1$) présente une tension inférieure à l'autre, caractérisé en ce que:

le circuit oscillant possède une fréquence de résonance (fr) supérieure à la fréquence (f) des onduleurs,

le déphaseur ($D_1$) est apte à introduire un déphasage entre la tension de sortie de l'onduleur pilote ($C_p$) et la tension de sortie de l'onduleur asservi ($Ca_1$) compris entre $-\pi/2$ et $+\pi/2$,

l'onduleur pilote ($C_p$) est associé à la source ($S_0$) de tension la plus élevée et est composé d'au moins une paire d'interrupteurs statiques commandables à semi-conducteurs, chaque interrupteur étant disposé en anti-parallèle avec une diode et du type (KA) apte à présenter un blocage spontané pour un courant voisin de 0 et un amorçage commandé,

l'onduleur asservi ($Ca_1$) est associé à la source ($S_1$) de tension la plus basse et est composé d'au moins une paire d'interrupteurs statiques commandables à semi-conducteurs, chaque interrupteur étant disposé en anti-parallèle avec une diode et du type (KB) apte à présenter un amorçage spontané sous tension voisine de 0 et un blocage commandé.

16. Dispositif selon la revendication 12, caractérisé en ce que:

le circuit oscillant possède une fréquence de résonance (fr) supérieure à la fréquence (f) des onduleurs,

le déphaseur ($D_1$) est apte à introduire un déphasage entre la tension de sortie de l'onduleur pilote ($C_p$) et la tension de sortie de l'onduleur asservi ($Ca_1$) compris entre $+\pi/2$ et $+3\pi/2$,

l'onduleur pilote ($C_p$) et l'onduleur asservi ($Ca_1$) sont chacun composés d'au moins une paire d'interrupteurs statiques commandables à semi-conducteurs, chaque interrupteur étant disposé en anti-parallèle avec une diode et du type (KA) apte à présenter un blocage spontané pour un circuit voisin de 0 et un amorçage commandé.

17. Dispositif selon la revendication 10, pour le réglage des échanges d'énergie entre deux sources de tension continue réversibles en cou-

rant ($S_0$, $S_1$) et une charge réceptrice continue (R), caractérisé en ce qu'il comprend:

(a) deux onduleurs de tension ($C_p$, $Ca_1$) ayant le même nombre de phases, chacun associé à l'une des sources de tension,

(b) un oscillateur ($D_r$) pilotant un des onduleurs ($C_p$), dit onduleur pilote, et un déphaseur ($D_1$) prenant sa référence sur ledit oscillateur et pilotant l'autre onduleur ($Ca_1$) dit onduleur asservi, en vue d'imposer à cet onduleur asservi une fréquence (f) identique à celle de l'onduleur pilote et un déphasage déterminé,

(c) un circuit oscillant LC série (OSC) connecté à chaque phase de chacun des onduleurs ($C_p$, $Ca_1$) chacun desdits circuits oscillants ayant une fréquence de résonance (f) du même ordre de grandeur que la fréquence (f) des onduleurs.

(d) un générateur de tension de commande (MC) relié au déphaseur ($D_1$) pour lui fournir une tension de commande ($sc_1$) fonction des échanges de puissance souhaités entre sources et charge,

(e) un redresseur à diodes ($C_R$) associé à la charge réceptrice (R) et présentant en entrée le même nombre de phases que les onduleurs, chaque phase dudit redresseur étant montée en étoile avec les circuits oscillants connectés sur les phases homologues des deux onduleurs.

18. Dispositif selon la revendication 17, caractérisé en ce que le déphaseur ($D_1$) est apte à introduire un déphasage variant de manière continue sur 180° en vue d'autoriser une variation continue de la puissance absorbée par la charge réceptrice (et donc fournie par les sources) comprise entre 0 et une valeur maximale.

19. Dispositif selon la revendication 18, pour le réglage des échanges d'énergie entre deux sources identiques et une charge réceptrice, caractérisé en ce que les circuits oscillants associés aux onduleurs sont tous identiques entre eux.

20. Dispositif selon l'une des revendications 18 ou 19, caractérisé en ce que:

chaque circuit oscillant possède une fréquence de résonance (fr) inférieure à la fréquence (f) des onduleurs ($C_p$, $Ca_1$),

le déphaseur ($D_1$) est apte à introduire un déphasage entre la tension de sortie de l'onduleur pilote ($C_p$) et la tension de sortie de l'onduleur asservi ($Ca_1$) compris entre 0 et π,

l'onduleur pilote ($C_p$) et l'onduleur asservi ($Ca_1$) sont chacun composés d'au moins une paire d'interrupteurs statiques commandables à semi-conducteurs, chaque interrupteur étant disposé en anti-parallèle avec une diode et du type (KB) apte à présenter un amorçage spontané sous une tension voisine de 0 et un blocage commandé.

21. Dispositif selon l'une des revendications 18 ou 19, caractérisé en ce que:

chaque circuit oscillant possède une fréquence de résonance (fr) supérieure à la fréquence (f) des onduleurs,

le déphaseur ($D_1$) est apte à introduire un déphasage entre la tension de sortie de l'onduleur pilote ($C_p$) et la tension de sortie de l'onduleur asservi ($Ca_1$) compris entre 0 et π,

l'onduleur pilote ($C_p$) et l'onduleur asservi ($Ca_1$) sont chacun composés d'au moins une paire d'interrupteurs statiques commandables à semi-conducteurs, chaque interrupteur étant disposé en anti-parallèle avec une diode et du type (KA) apte à présenter un blocage spontané pour un courant voisin de 0 et un amorçage commandé.

22. Dispositif selon l'une des revendications 1, 2, 3, 4, 5, 6, 7, 8 ou 9 pour le réglage des échanges d'énergie entre une source de tension continue réversible en courant ($S_0$) et un système électrique complexe (Sx) générateur et/ou récepteur, à n entrées ($E_1$, $E_2$...$E_n$), caractérisé en ce qu'il comprend:

(a) un onduleur de tension pilote ($C_0$) associé à la source ($S_0$) et n onduleurs de tension ($Cx_1$, $Cx_2$...$Cx_n$) chacun associé à une entrée du système complexe (Sx),

(b) un oscillateur ($D_r$) pilotant l'onduleur de tension ($C_p$) et n déphaseurs ($D_1$...$D_n$) prenant leur référence sur ledit oscillateur et pilotant les onduleurs asservis ($Cx_1$...$Cx_n$) en vue d'imposer à ces derniers une fréquence (f) identique à celle de l'onduleur pilote et un déphasage déterminé,

(c) un réseau oscillant (OSC) auquel sont reliés l'onduleur pilote $C_p$ et les onduleurs asservis ($Cx_1$...$Cx_n$) par l'entremise de transformateurs ($T_1$, $T_2$...$T_n$), lesdits transformateurs étant connectés par leurs enroulements primaires aux divers onduleurs et par leurs enroulements secondaires au réseau oscillant, ledit réseau étant apte à assurer un stockage temporaire d'énergie et à osciller à la fréquence commune (f) précitée,

(d) des moyens de commande (MC) des déphaseurs ($D_1$...$D_n$) adaptés pour délivrer vers ceux-ci des signaux de commande ($sc_1$...$sc_n$) fonction des échanges d'énergie souhaités.

23. Dispositif selon la revendication 22, caractérisé en ce que:

du côté continu, chaque onduleur asservi ($Cx_1$...$Cx_n$) est fermé sur un condensateur ($Y_1$, $Y_2$...$Y_n$),

les n onduleurs asservis sont couplés en étoile par leurs bornes continues,

les n entrées ($E_1$...$E_n$) du système électrique (Sx) sont connectés sur les n sommets libres de l'étoile constituée par le couplage des onduleurs.

24. Dispositif selon l'une des revendications 22 ou 23, caractérisé en ce que le réseau oscillant (OSC) est constitué d'un circuit oscillant LC série, connecté en série avec l'onduleur pilote $C_p$ et avec les n secondaires des transformateurs ($T_1$, $T_2$...$T_n$), eux-mêmes interconnectés en série.

25. Dispositif selon l'une des revendications 22 ou 23, caractérisé en ce que:

le réseau oscillant (OSC) est constitué de n circuits oscillants LC série identiques ($OSC_1$...$OSC_n$),

chaque circuit oscillant ($OSC_1$...$OSC_n$) est connecté en série avec le secondaire d'un transformateur ($T_1$...$T_n$),

les n circuits constitués chacun par un secondaire de transformateur et par un circuit oscillant sont montés en parallèle sur l'onduleur pilote ($C_p$).

26. Dispositif selon l'une des revendications 22, 23, 24 ou 25 appliqué pour contrôler les échanges de puissances entre une source de tension continue réversible en courant ($S_0$) et un système électrique ($Sx$) formé par un dipôle ($Sx$) réversible en tension et/ou en courant.

27. Dispositif selon l'une des revendications 22, 23, 24 ou 25, appliqué pour contrôler les échanges de puissance entre une source de tension continue réversible en courant ($S_0$) et un système électrique polyphasé ($Sx$).

**Patentansprüche**

1. Vorrichtung zur Regelung des Energieaustauschs zwischen mindestens zwei elektrischen Erzeugungs- und/oder Verbrauchersystemen ($S_0$, $S_1...S_n$) zwecks Steuerung der durch die besagten Systeme gemäß einem bestimmten Pflichtenheft gelieferten oder absorbierten Leistungen, wobei die besagte Vorrichtung die folgenden Systeme umfaßt:

(a) in Verbindung mit jedem elektrischen System mindestens einen statischen Umformer elektrischer Energie ($C_p$, $Ca_1...Ca_n$), der mit dem besagten System in Verbindung steht und einen Führungseingang für den Empfang eines Führungssignals umfaßt, wobei die besagten Umformer so beschaffen sind, daß sie die elektrischen Größen der verschiedenen Systeme in von den Führungssignalen abhängige elektrische Frequenz- und Phasengrößen umformen,

(c) einen Schwingkreis (OSC), der mit den verschiedenen Umformern in Verbindung steht und so beschaffen ist, daß er vorübergehende Energiespeicherung gewährleistet, wobei die besagte Vorrichtung dadurch gekennzeichnet ist,

(b) daß ein steuerbarer Phasenschieberkreis (D) mit den Führungseingängen der statischen Umformer in Verbindung steht, wobei der besagte Kreis so beschaffen ist, daß er Führungssignale ($sp$, $sa_1...sa_n$) erzeugt, die es ermölichen, am Ausgang der besagten Umformer elektrische Größen zu erzielen, die:

einerseits eine gemeinsame Frequenz ($f$) aufweisen, die höher ist als die höchste der Frequenzen der verschiedenen Systeme ($S_0$, $S_1...S_n$),

und andererseits relative Phasen in Abhängigkeit von durch den besagten Phasenschieberkreis empfangenen Steuersignalen aufweisen, um die Regelung der Energieaustausche durch die besagten Umformer hindurch zu gewährleisten,

(c) daß der Schwingkreis (OSC) so beschaffen ist, daß er mit der gemeinsamen Frequenz ($f$) schwingen kann, die höher ist als die der Systeme,

(d) daß Mittel zur Steuerung (MC) des Phasenschieberkreises so beschaffen sind, daß sie dem besagten Kreis Steuersignale ($sc_1$, $sc_2...sc_n$) in Abhängigkeit von den durch das besagte Pflichtenheft vorgeschriebenen Energieaustauschen liefern.

2. Vorrichtung nach Anspruch 1, dadurch gekennzeichnet, daß der Phasenschieberkreis (D) die folgenden Einheiten umfaßt:

eine Bezugseinheit ($D_r$), die mit dem Führungseingang eines der Umformer ($C_p$), dem sogenannten Führungsumformer, verbunden ist, um die gemeinsame Frequenz ($f$) zu bewirken,

eine Phasenregeleinheit ($D_1$, $D_2...D_n$), die mit den Führungseingängen der anderen Umformer ($Ca_1...Ca_n$), den sogenannten gesteuerten Umformern, verbunden ist, um am Ausgang der besagten gesteuerten Umformer Phasenverschiebungen im Verhältnis zu dem Führungsumformer in Abhängigkeit von Steuersignalen ($sc_1...sc_n$) zu bewirken.

3. Vorrichtung nach Anspruch 2, dadurch gekennzeichnet,

daß die Bezugseinheit ($D_r$) so beschaffen ist, daß sie ein Führungssignal ($sp$) erzeugt, das ausschließlich eine Information gemeinsamer Frequenz ($f$) überträgt,

daß die Phasenregeleinheit ($D_1...D_n$) so beschaffen ist, daß sie Führungssignale ($sa_1...sa_n$) erzeugt, von denen jedes ausschließlich eine Information gemeinsamer Frequenz und eine Information relativer Phase überträgt.

4. Vorrichtung nach einem der Ansprüche 2 oder 3, dadurch gekennzeichnet, daß die Bezugseinheit ($D_r$) so beschaffen ist, daß sie eine gemeinsame Frequenz bewirkt, die höher ist als die höchste der Frequenzen der verschiedenen Systeme ($S_0$, $S_1...S_n$).

5. Vorrichtung nach einem der Ansprüche 2, 3 oder 4, dadurch gekennzeichnet,

daß die Bezugseinheit ($D_r$) einen Oszillator mit regelbarer Frequenz umfaßt, der es ermöglicht die besagte gemeinsame Frequenz zu regeln,

daß die Phasenregeleinheit Phasenschieber ($D_1$, $D_2...D_n$) umfaßt, und zwar in gleicher Anzahl wie die Anzahl der gesteuerten Umformer ($Ca_1$, $Ca_2...Ca_n$), wobei jeder Phasenschieber mit einem gseteuerten Umformer verbunden ist.

6. Vorrichtung nach einem der Ansprüche 1, 2, 3, 4 oder 5, bei der der Schwingkreis (OSC) in einem Netz möglicherweise gekoppelter Induktanzen und Kondensatoren besteht, das so beschaffen ist, daß es bei der besagten gemeinsamen Frequenz schwingt.

7. Vorrichtung nach einem der Ansprüche 1, 2, 3, 4, 5 oder 6, bei der die Umformer durch statische Halbeiter-Schalter gebildet sind, die mit Schalthilfekreisen in Verbindung stehen.

8. Vorrichtung nach Anspruch 7, dadurch gekennzeichnet, daß die Halbleiter-Umformer mit Transformatoren ($T_0$, $T_1...T_n$) in Verbindung stehen, die so beschaffen sind, daß sie Anpassung der Impedanz und/oder galvanische Isolation gewährleisten

9. Vorrichtung nach einem der Ansprüche 1, 2, 3, 4, 5, 6, 7 oder 8, bei der jeder der Umformer ($C_p$, $Ca_1...Ca_n$) mindestens einen steuerbaren statischen Halbleiter-Schalter umfaßt, der mit einem Sperr- und/oder Erregungskreis versehen ist, wobei diese so beschaffen ist, daß sie den Schalter in Abhängigkeit von dem Führungssignal schaltet.

10. Vorrichtung nach einem der Ansprüche 1, 2, 3, 4, 5, 6, 7, 8 oder 9, die Energieübertragung auf mindestens eine Empfangslast (R) gestattet, dadurch gekennzeichnet, daß sie:

(e) an jeder Empfangslast (R) angeschlossen einen nicht steuerbaren statischen Umformer ($C_R$) umfaßt, der mit dem Schwingkreis (OSC) in Verbindung steht.

11. Vorrichtung nach einem der vorstehenden Ansprüche zur Regelung von Energieaustauschen zwischen zwei Strom-umsteuerbaren Gleichspannungsquellen ($S_0$, $S_1$), dadurch gekennzeichnet, daß sie die folgenden Teile umfaßt:

(a) zwei Spannungswechselrichter ($C_p$, $Ca_1$) mit der gleichen Anzahl von Phasen, wobei jeder Wechselrichter mit einer der Spannungsquellen in Verbindung steht,

(b) einen Oszillator ($D_r$) zur Steuerung eines der Wechselrichter ($C_p$), des sogenannten Führungswechselrichters, und eines Phasenschiebers ($D_1$), dem der besagte Oszillator zum Bezug dient und der den anderen Wechselrichter ($Ca_1$), den sogenannten gesteuerten Wechselrichter, steuert, um in dem besagten gesteuerten Wechselrichter eine mit der des Führungswechselrichters identische Frequenz (f) und eine bestimmte Phasenverschiebung zu bewirken,

(c) einen LC-Serienschwingkreis (OSC) für jede Phase der Wechselrichter, der die Übereinstimmenden Phasen der beiden Wechselrichter verbindet, wobei der besagte Kreis eine Resonanzfrequenz (fr) aufweist, deren Größe von der gleichen Ordnung ist wie die der Frequenz (f) der Wechselrichter,

(d) einen Steuerspannungserzeuger (MC), der mit dem Phasenschieber ($D_1$) in Verbindung steht, um ihm eine Steuerspannung ($sc_1$) in Abhängigkeit von den zwischen Quellen gewünschten Leistungsaustauschen zu liefern.

12. Vorrichtung nach Anspruch 11, dadurch gekennzeichnet daß der Phasenschieber ($D_1$) so beschaffen ist, daß er eine kontinuierlich über 180° veränderliche Phasenverschiebung bewirkt, um laufende Änderung der durch eine der Quellen gelieferten (und somit durch die andere Quelle absorbierten) Leistung zwischen zwei Grenzwerten, ($P_M$) positiv und ($P_m$) negativ, zu ermöglichen.

13. Vorrichtung nach Anspruch 12, dadurch gekennzeichnet,

daß der Schwingkreis (OSC) eine Resonanzfrequenz (fr) aufweist, die geringer ist als die Frequenz (f) der Wechselrichter,

daß der Phasenschieber ($D_1$) so beschaffen ist, daß er eine Phasenverschiebung zwischen der Ausgangsspannung des Führungswechselrichters ($C_p$) und der Ausgangsspannung des gesteuerten Wechselrichters ($Ca_1$) zwischen $+\pi/2$ und $+3\pi/2$ bewirkt,

daß der Führungswechselrichter und der steuerte Wechselrichter jeweils aus mindestens einem Paar steuerbarer statischer Halbleiter-Schalter ($K_l$) bestehen, wobei jeder Schalter mit einer Diode ($K_d$) antiparallel geschaltet und von Typ (KB) ist, so daß er bei einer Spannung im Bereiche von O spontane Erregung sowie gesteuerte Sperrung bewirkt.

14. Vorrichtung nach Anspruch 12 zur Regelung von Energieaustauschen zwischen zwei Gleichspannungsquellen ($S_0$, $S_1$), von denen die eine ($S_1$) eine geringere Spannung aufweist als die andere, dadurch gekennzeichnet,

daß der Schwingkreis (OSC) eine Resonanzfrequenz (fr) aufweist, die geringer ist als die Frequenz (f) der Wechselrichter,

daß der Phasenschieber ($D_1$) so beschaffen ist, daß er zwischen der Ausgangsspannung des Führungswechselrichters ($C_p$) und der Ausgangsspannung des gesteuerten Wechselrichters ($Ca_1$) eine Phasenverschiebung zwischen $-\pi/2$ und $+\pi/2$ bewirkt,

daß der Führungswechselrichter ($C_p$) mit der Quelle ($S_p$) höchster Spannung in Verbindung steht und aus mindestens einem Paar steuerbarer statischer Halbleiter-Schalter besteht, wobei jeder Schalter antiparallel zu einer Diode geschaltet und von Typ (KB) ist, so daß er bei der Spannung im Bereiche von 0 spontane Erregung und gesteuerte Sperrung bewirkt,

daß der gesteuerte Wechselrichter ($Ca_1$) mit der Quelle ($S_1$) niedrigster Spannung in Verbindung steht und aus mindestens einem Paar steuerbarer statischer Halbleiter-Schalter besteht, wobei jeder Schalter antiparallel zu einer Diode geschaltet und von Typ (KA) ist, so daß er bei einem Strom im Bereiche von 0 spontane Sperrung und gesteuerte Erregung bewirkt.

15. Vorrichtung nach Anspruch 12, zur Regelung von Energieaustauschen zwischen zwei Gleichspannungsquellen ($S_0$, $S_1$), von denen die eine ($S_1$) eine niedrigere Spannung liefert als die andere, dadurch gekennzeichnet,

daß der Schwingkreis eine Resonanzfrequenz (fr) aufweist, die höher ist als die Frequenz (f) der Wechselrichter,

daß der Phasenschieber ($D_1$) so beschaffen ist, daß er zwischen der Ausgangsspannung des Führungswechselrichters ($C_p$) und der Ausgangsspannung des gesteuerten Wechselrichters ($Ca_1$) eine Phasenverschiebung zwischen $-\pi/2$ und $+\pi/2$ bewirkt,

daß der Führungswechselrichter ($C_p$) mit der Quelle ($S_0$) der höchsten Spannung in Verbindung steht und aus mindestens einem Paar steuerbarer statischer Halbleiter-Schalter besteht, wobei jeder Schalter antiparallel zu einer Diode geschaltet und von Typ (KA) ist, so daß er bei einem Strom im Bereiche von 0 spontane Sperrung und gesteuerte Erregung bewirkt,

daß der gesteuerte Wechselrichter ($Ca_1$) mit der Quelle ($S_1$) der niedrigsten Spannung in Verbindung steht und aus mindestens einem Paar steuerbarer statischer Halbleiter-Schalter besteht, wobei jeder Schalter antiparallel zu einer Diode geschaltet und von Typ (KB) ist, so daß er bei der Spannung im Bereiche von 0 spontane Erregung und gesteuerte Sperrung bewirkt.

16. Vorrichtung nach Anspruch 12, dadurch gekennzeichnet,

daß der Schwingkreis eine Resonanzfrequenz (fr) aufweist, die höher ist als die Frequenz (f) der Wechselrichter,

daß der Phasenschieber ($D_1$) so beschaffen ist, daß er zwischen der Ausgangsspannung das Führungswechselrichters ($C_p$) und der Ausgangsspannung des gesteuerten Wechselrichters ($Ca_1$) eine Phasenverschiebung zwischen $+\pi/2$ und $+3\pi/2$ bewirkt.

daß sowohl der Führungswechselrichter ($C_p$) wie auch der gesteuerte Wechselrichter ($Ca_1$) aus mindestens einem Paar steuerbarer statischer Halbleiter-Schalter bestehen, wobei jeder Schalter antiparalle zu einer Diode geschaltet und von Typ (KA) ist, so daß er bei einem Strom im Bereiche von 0 spontane Sperrung und gesteuerte Erregung bewirkt.

17. Vorrichtung nach Anspruch 10 zur Regelung von Energie-austauschen zwischen zwei stromumsteuerbaren Gleichspannungsquellen ($S_0$, $S_1$) und einer Empfangslast (R), dadurch gekennzeichnet, daß sie die folgenden Teile umfaßt:

(a) zwei Spannungswechselrichter ($C_p$, $Ca_1$) mit der gleichen Anzahl von Phasen, von denen jeder mit einer der Spannungsquellen in Verbindung steht,

(b) einen Oszillator ($D_r$), der einen der Wechselrichter ($C_p$), den sogenannten Führungswechselrichter, steuert, und einen Phasenschieber ($D_1$), dem der besagte Oszillator als Bezug dient und der den anderen Wechselrichter ($Ca_1$), den sogenannten gesteuerten Wechselrichter, steuert, um in diesem gesteuerten Wechselrichter eine mit der Frequenz des Führungswechselrichters identische Frequenz (f) und eine bestimmte Phasenverschiebung zu bewirken,

(c) einen an jeder Phase jedes der Wechselrichter ($C_p$, $Ca_1$) angeschlossenen LC-Serien-Schwingkreis (OSC), wobei jeder der besagten Schwingkreise eine Resonanzfrequenz (f) der gleichen Größenordnung wie die Frequenz (f) der Wechselrichter aufweist,

(d) einen Steuerspannungserzeuger (MC), der an dem Phasenschieber ($D_1$) angeschlossen ist, um diesem eine von den zwischen Quellen und Ladung gewünschten Leistungsaustauschen abhängige Steuerspannung ($sc_1$) zu vermitteln.

(e) einen mit der Empfangslast (R) in Verbindung stehenden Diodengleichrichter ($C_R$), der am Eingang die gleiche Anzahl von Phasen aufweist wie die Wechselrichter, wobei jede Phase des besagten Gleichrichters in Sternform geschaltet ist und die Schwingkreise an den übereinstimmenden Phasen der beiden Wechselrichter angeschlossen sind.

18. Vorrichtung nach Anspruch 17, dadurch gekennzeichnet, daß der Phasenschieber ($D_1$) so beschaffen ist, daß er eine über 180° kontinuierlich variierende Phasenverschiebung bewirkt, um kontinuierliche Änderung der durch die Empfangslast (und somit durch die Quellen gelieferten Empfangslast) zwischen 0 und einem Höchstwert zu gastatten.

19. Vorrichtung nach Anspruch 18 zur Regelung von Energieaustauschen zwischen zwei identischen Quellen und einer Empfangslast, dadurch gekennzeichnet, daß die mit den Wechselrichtern in Verbindung stehenden Schwingkreise alle untereinander identisch sind.

20. Vorrichtung nach einem der Ansprüche 18 oder 19, dadurch gekennzeichnet,

daß jeder Schwingkreis eine Frequenzresonanz (fr) aufweist, die geringer ist als die Frequenz (f) der Wechselrichter ($C_p$, $Ca_1$),

daß der Phasenschieber ($D_1$) so beschaffen ist, daß er zwischen der Ausgangsspannung des Führungswechselrichters ($C_p$) und der Ausgangsspannung des gesteuerten Wechselrichters ($Ca_1$) eine Phasenverschiebung zwischen 0 und $\pi$ bewirkt,

daß sowohl der Führungswechselrichter ($C_p$) wie auch der gesteuerte Wechselrichter ($Ca_1$) aus mindestens einem Paar steuerbarer statischer Halbleiter-Schalter bestehen, wobei jeder Schalter antiparallel zu einer Diode geschaltet und von Typ (KB) ist, so daß er bei einer Spannung im Bereiche von 0 spontane Erregung und gesteuerte Sperrung bewirkt.

21. Vorrichtung nach einem der Ansprüche 18 oder 19, dadurch gekennzeichnet,

daß jeder Schwingkreis eine Resonanzfrequenz (fr) aufweist, die höher ist als die Frequenz (f) der Wechselrichter,

daß der Phasenschieber ($D_1$) so beschaffen ist, daß er zwischen der Ausgangsspannung des Führungswechselrichters ($C_p$) und der Ausgangsspannung des gesteuerten Wechselrichters ($Ca_1$) eine Phasenverschiebung zwischen 0 und $\pi$ bewirkt,

daß sowohl der Führungswechselrichter ($C_p$) wie auch der gesteuerte Wechselrichter ($Ca_1$) aus mindestens einem Paar steuerbarer statischer Halbleiter-Schalter bestehen, wobei jeder Schalter anti-parallel zu einer Diode geschaltet und von Typ (KA) ist, so daß er bei einem Strom im Bereiche von 0 spontane Sperrung und gesteuerte Erregung bewirkt.

22. Vorrichtung nach einem der Ansprüche 1, 2, 3, 4, 5, 6, 7, 8 oder 9 zur Regelung der Energieaustausche zwischen einer stromumsteuerbaren Gleichspannungsquelle ($S_0$) und einem komplexen elektrischen Erzeuger und/oder Empfangssystem (Sx) mit n Eingängen ($E_1$, $E_2$...$E_n$), dadurch gekennzeichnet, daß es die folgenden Teile umfaßt:

(a) einen Führungswechselrichter der Spannung ($C_p$), der mit der Quelle ($S_0$) in Verbindung steht und n Spannungswechselrichter ($Cx_1$, $Cx_2$...$Cx_n$), von denen jeder mit einem Eingang des komplexen Systems (Sx) in Verbindung steht,

(b) einen Oszillator ($D_r$), der den Spannungswechselrichter ($C_p$) und n Phasenschieber ($D_1$...$D_n$) steuert, denen der besagte Oszillator als Bezug dient und die die gesteuerten Wechselrichter ($Cx_1$...$Cx_n$) steuern, um in letzteren eine mit der des Führungswechselrichters identische Frequenz (f) und eine bestimmte Phsenverschiebung zu bewirken,

(c) ein Schwingnetz (OSC), mit dem der Führungswechselrichter $C_p$ und die gesteuerten Wechselrichter ($Cx_1$...$Cx_n$) unter Zwischenschal-

tung von Transformatoren (T₁, T₂...Tₙ) verbunden sind, wobei die besagten Transformatoren durch ihre Primärwicklungen mit den verschiedenen Wechselrichtern und durch ihre Sekundärwicklungen mit dem besagten Schwingnetz in Verbindung stehen, wobei das besagte Netz so beschaffen ist, daß es vorübergehende Energiespeicherung und Schwingung mit der besagten gemeinsamen Frequenz (f) gewährleistet,

(d) Mittel zur Steuerung (MC) der Phasenschieber (D₁...Dₙ), die so beschaffen sind, daß sie an diese Steuersignals (sc₁...scₙ) in Abhängigkeit von den gewünschten Energieaustauschen übertragen.

23. Vorrichtung nach Anspruch 22, dadurch gekennzeichnet,

daß an der Gleichspannungsseite jeder gesteuerte Wechselrichter (Cx₁...Cxₙ) mit einem Kondensator (γ₁, γ₂...γₙ) in Verbindung steht,

daß die n gesteuerten Wechselrichter in Sternschaltung durch ihre Gleichspannungsklemmen verbunden sind,

daß die n Eingänge (E₁...Eₙ) des elektrischen Systems (Sx) mit den n freien durch die Verbindung der Wechselrichter gebildeten Scheiteln der Sternschaltung verbunden sind.

24. Vorrichtung nach einem der Ansprüche 22 oder 23, dadurch gekennzeichnet, daß das Schwingnetz (OSC) aus einem LC-Serien-Schwingkreis besteht, der mit dem Führungswechselrichter Cₚ und mit den n Sekundärwicklungen der Transformatoren (T₁, T₂...Tₙ) in Serie geschaltet ist, wobei die besagten Transformatoren selbst in Serie geschaltet sind.

25. Vorrichtung nach einem der Ansprüche 22 oder 23, dadurch gekennzeichnet,

daß das Schwingnetz (OSC) aus n identischen LC-Serien-Schwingkreisen (OSC₁...OSCₙ) besteht,

daß jeder Schwingkreis (OSC₁...OSCₙ) in Serie mit der Sekundärwicklung eines Transformators (T₁...Tₙ) geschaltet ist,

daß die n Kreise, von denen jeder durch eine Transformator-Sekundärwicklung und einen Schwingkreis gebildet ist, parallel zu dem Führungswechselrichter (Cₚ) geschaltet sind.

26. Vorrichtung nach einem der Ansprüche 22, 23, 24 oder 25 zur Steuerung von Leistungsaustauschen zwischen einer strom-umsteuerbaren Gleichspannungsquelle (S₀) und einem elektrischen System (Sx), das durch einen Spannungs- und/oder strom-umsteuerbaren Dipol (Sx) gebildet ist.

27. Vorrichtung nach einem der Ansprüche 22, 23, 24 oder 25 zum Steuern der Leistungsaustausche zwischen einer strom-umsteuerbaren Gleichspannungsquelle (S₀) und einem mehrphasigen elektrischen System (Sx).

## Claims

1. Device for regulating energy exchange between at least two electric generator and/or receptor systems (S₀, S₁...Sₙ) with a view to controlling the powers delivered or absorbed by said systems according to a laid down specification, said device comprising:

(a) in association with every electric system at least one static converter of electric energy (Cₚ, Ca₁...Caₙ) connected with said system and having a pilot input for receiving a pilot signal, said converters being so designed as to convert the electric magnitudes of the different systems into electric frequency and phase magnitudes as a function of the pilot signals,

(c) an oscillating network (OSC) connected with the different converters and so designed as to ensure temporary energy storage,

said device being characterised in that:

(b) a controllable phase-shift network (D) is connected to the pilot inputs of the static converters, this circuit being so designed as to generate pilot signals (sp, sa₁...saₙ) making it possible to obtain at the output of said converters electric magnitudes with:

on the one hand, a common frequency (f) higher than the highest of the frequencies of the different systems (S₀, S₁...Sₙ),

on the other hand, relative phases as a function of control signals received by said phase-shift circuit with a view to ensuring energy exchange regulation through said converters,

(c) the oscillating network (OSC) is so designed as to be able to oscillate at the common frequency (f) which is higher than those of the systems,

(d) control means (MC) for the phase-shift circuit, so designed as to supply to said circuit control signals (sc₁, sc₂...scₙ) as a function of the energy exchanges prescribed by the said specification.

2. Device according to claim 1, characterised in that phase-shift circuit (D) comprises:

a reference unit (Dr) connected to the pilot input of one of the converters (Cₚ), the so-called pilot converter, with a view to imposing the common frequency (f),

a phase-regulating unit (D₁, D₂...Dₙ) connected to the pilot inputs of the other converters (Ca₁...Caₙ), the controlled converters, with a view to bringing about, at the output of said controlled converters, phase-shifts in relation to the pilot converter, as a function of the control signals (sc₁...scₙ).

3. Device according to claim 2, characterised in that:

the reference unit (Dr) is so designed as to generate a pilot signal (sp) carrying only a common frequency information (f),

the phase-regulating unit (D₁...Dₙ) is so designed as to generate pilot signals (sa₁...saₙ), each of which carries only a common frequency information and a relative phase information.

4. Device according to one of claims 2 or 3, characterised in that the reference unit (Dr) is so designed as to bring about a common frequency higher than the highest of the frequencies of the different systems (S₀, S₁...Sₙ).

5. Device according to one of claims 2, 3 or 4, characterised in that:

the reference unit ($D_r$) comprises an oscillator with adjustable frequency, making it possible to regulate the said common frequency,

the phase-regulating unit comprises phase-shifters ($D_1$, $D_2$...$D_n$), the number of which is equal to the number of controlled converters ($Ca_1$, $Ca_2$...$Ca_n$), each phase-shifter being associated with a controlled converter.

6. Device according to one of claims 1, 2, 3, 4, or 5, in which the oscillating network (OSC) is constituted by a network of possibly coupled inductances and of condensers, so designed as to oscillate at the said common frequency.

7. Device according to one of claims 1, 2, 3, 4, 5 or 6, in which the converters consist in static semi-conductor switches, associated with circuits assisting the switching process.

8. Device according to claim 7, characterised in that the semi-conductor converters are associated with transformers ($T_0$, $T_1$...$T_n$), so designed as to ensure impedance adaptation and/or galvanic insulation.

9. Device according to one of claims 1, 2, 3, 4, 5, 6, 7 or 8, in which each converter ($C_p$, $Ca_1$...$Ca_n$) comprises at least one controllable static semi-conductor switch, endowed with a blocking and/or initiating circuit so as to switch the switch as a function of the pilot signal.

10. Device according to one of claims 1, 2, 3, 4, 5, 6, 7, 8 or 9, enabling energy transfer towards at least one receptor load (R), characterised in that it comprises:

(e) connected to each receptor load (R) a non-controllable static converter ($C_R$), connected with the oscillating network (OSC).

11. Device according to one of the above claims for regulating energy exchange between two current-reversible direct-voltage sources ($S_0$, $S_1$), characterised in that it comprises:

(a) two voltage inverters ($C_p$, $Ca_1$) having the same number of phases, each of these inverters being associated with one of the voltage sources,

(b) an oscillator ($D_r$) controlling one of the inverters ($C_p$), the so-called pilot inverter, and a phase-shifter ($D_1$) using said oscillator by way of reference and controlling the other inverter ($Ca_1$), the so-called controlled inverter, with a view to inducing in said controlled inverter a frequency (f) identical to that of the pilot inverter and a predetermined phase-shift,

(c) an oscillating circuit in LC series (OSC) for each phase of the inverters, connecting the homologous phases of the two inverters, said circuit having a resonance frequency (fr) of the same order of magnitude as frequency (f) of the inverters,

(d) a control voltage generator (MC) connected with phase-shifter ($D_1$) in order to supply it with a control voltage ($sc_1$) as a function of the power exchanges to be brought about between sources.

12. Device according to claim 11, characterised in that the phase-shifter ($D_1$) is so designed as to bring about a phase-shift varying in continuous fashion over 180°, with a view to enabling continuous variation of the power furnished by one of the sources (and hence absorbed by the other), comprised between the extreme values, positive ($P_M$) and negative ($P_m$).

13. Device according to claim 12, characterised in that:

the oscillating circuit (OSC) has a resonance frequency (fr) lower than the frequency (f) of the inverters,

the phase-shifter ($D_1$) is so designed as to bring about a phase-shift between the output voltage of the pilot inverter ($C_p$) and the output voltage of the controlled inverter ($Ca_1$) between $+\pi/2$ and $+3\pi/2$,

the pilot inverter and the controlled inverter are each composed of at least one pair of controllable static semi-conductor switches ($K_i$), each switch being arranged in antiparallel manner with one diode ($K_d$) and of type (KB), so as to cause spontaneous initiation at a voltage close to 0 and controlled blocking.

14. Device according to claim 12 for regulating energy exchange between two direct voltage sources ($S_0$, $S_1$), one of which ($S_1$) provides a lower voltage then the other, characterised in that:

the oscillating circuit (OSC) has a resonance frequency (fr) which is lower than the frequency (f) of the inverters,

the phase-shifter ($D_1$) is so designed as to cause a phase-shift between $-\pi/2$ and $+\pi/2$ between the output voltage of pilot inverter ($C_p$) and the output voltage of controlled inverter ($Ca_1$),

the pilot inverter ($C_p$) is connected with the source ($S_0$) of highest voltage and consists of at least one pair of controllable static semi-conductor switches, each switch being arranged in anti-parallel manner with one diode and of type (KB) so as to cause spontaneous initiation at a voltage close to 0 and controlled blocking,

the controlled inverter ($Ca_1$) is associated with the lowest voltage source ($S_1$) and consists of at least one pair of controllable static semi-conductor switches, each switch being connected in antiparallel manner with a diode and of type (KA) so as to cause spontaneous blocking at a current close to 0 as well as controlled initiation.

15. Device according to claim 12 for regulating energy exchange between two direct-voltage sources ($S_0$, $S_1$), one of which ($S_1$) produces a lower voltage then the other, characterised in that:

the oscillating circuit has a resonance frequency (fr) higher than frequency (f) of the inverters,

the phase-shifter ($D_1$) is so designed as to cause a phase-shift between the output voltage of pilot inverter ($C_p$) and the output voltage of the controlled inverter ($Ca_1$), between $-\pi/2$ and $+\pi/2$,

the pilot inverter ($C_p$) is associated with the source ($S_0$) of highest voltage and consists of at least one pair of controllable static semi-conductor switches, each switch being connected in antiparallel manner with a diode and of type (KA), so as to cause spontaneous blocking at a current close to 0 as well as controlled initiation,

the controlled inverter ($Ca_1$) is associated with

source ($S_1$) of the lowest voltage and consists of at least one pair of controllable static semi-conductor switches, each switch being connected in antiparallel manner with a diode and of type (KB) so as to cause spontaneous initiation at a voltage close to 0 as well as controlled blocking.

16. Device according to claim 12, characterised in that

the oscillating circuit has a resonance frequency (fr) higher than frequency (f) of the inverters,

the phase-shifter ($D_1$) is so designed as to bring about a phase-shift between the output voltage of pilot inverter ($C_p$) and the output voltage of controlled inverter ($Ca_1$), between $+\pi/2$ and $+3\pi/2$,

the pilot inverter ($C_p$) and the controlled inverter ($Ca_1$) each consist of at least one pair of controllable static semi-conductor switches, each switch being arranged in antiparallel manner with a diode and of type (KA) so as to cause spontaneous blocking with a current close to 0 as well as controlled initiation.

17. Device according to claim 10 for regulating energy exchange between two current-reversible direct-voltage sources ($S_0$, $S_1$) and a continuous receptor load (R), characterised in that it comprises:

(a) two voltage inverters ($C_p$, $Ca_1$) having the same number of phases, each inverter being associated with one of the voltage sources,

(b) an oscillator ($D_r$) controlling one of the inverters ($C_p$), said pilot inverter and a phase-shifter ($D_1$) using said oscillator by way of reference and controlling the other inverter ($Ca_1$), the so-called controlled inverter, with a view to inducing in said controlled inverter a frequency (f) identical with that of the pilot inverter as well as a predetermined phase-shift,

(c) an oscillating circuit in LC series (OSC) connected to each phase of each inverter ($C_p$, $Ca_1$), each of said oscillating circuits having a resonance frequency (f) of the same order of magnitude as the frequency (f) of the inverters,

(d) a control voltage generator (MC) connected with phase-shifter ($D_1$) in order to supply to it a control voltage ($sc_1$) as a function of the power exchanges to be brought about between sources and load,

(e) a diode rectifier ($C_R$) associated with the receptor load (R) and presenting at the input the same number of phases as the inverters, each phase of said rectifier being connected in star-form with the oscillating circuits connected to the homologue phases of the two inverters.

18. Device according to claim 17, characterised in that the phase-shifter ($D_1$) is so designed as to bring about a phase-shift varying in continuous manner over 180°, with a view to enabling continuous variation of the power absorbed by the receptor load (and hence furnished by the sources), between 0 and a maximum value.

19. Device according to claim 18, for regulating energy exchange between two identical sources and a receptor load, characterised in that the oscillating circuits associated with the inverters are all identical with each other.

20. Device according to one of claims 18 or 19, characterised in that:

each oscillating circuit has a resonance frequency (fr) lower than frequency (f) of the inverters ($C_p$, $Ca_1$),

the phase-shifter ($D_1$) is so designed as to bring about a phase-shift between the output voltage of pilot inverter ($C_p$) and the output voltage of controlled inverter ($Ca_1$), between 0 and $\pi$.

the pilot inverter ($C_p$) and the controlled inverter ($Ca_1$) each consist of at least one pair of controllable static semi-conductor switches, each switch being connected in antiparallel manner with one diode and of type (KB), so as to cause spontaneous initiation at a voltage close to 0 as well as controlled blocking.

21. Device according to one of claims 18 or 19, characterised in that:

each oscillating circuit has a resonance frequency (fr) higher than frequency (f) of the inverters,

the phase-shifter ($D_1$) is so designed as to bring about a phase-shift between the output voltage of pilot inverter ($C_p$) and the output voltage of controlled inverter ($Ca_1$), between 0 and $\pi$,

the pilot inverter ($C_p$) and the controlled inverter ($Ca_1$) each consist of at least one pair of controllable static semi-conductor switches, each switch being connected in antiparallel manner with a diode and of type (KA) so as to cause spontaneous blocking at a current close to 0 as well as controlled blocking.

22. Device according to one of claims 1, 2, 3, 4, 5, 6, 7, 8 or 9 for controlling the exchange of energy between a current-reversible direct-voltage source ($S_0$) and a complex electrical generator and/or receptor system (Sx) with n inputs ($E_1$, $E_2$...$E_n$), characterised in that it comprises:

(a) a pilot voltage inverter ($C_p$) associated with the source ($S_0$) and n voltage inverters ($Cx_1$, $Cx_2$...$Cx_n$), each associated with a complex system input (Sx),

(b) an oscillator ($D_r$) controlling the voltage inverter ($C_p$) and n phase-shifters ($D_1$...$D_n$), using said oscillator by way of reference and controlling the controlled inverters ($Cx_1$...$Cx_n$) with a view to inducing in the latter a frequency (f) identical with that of the pilot inverter as well as a predetermined phase-shift,

(c) an oscillating network (OSC) with which are connected the pilot inverter $C_p$ and the controlled inverters ($Cx_1$...$Cx_n$) via transformers ($T_1$, $T_2$...$T_n$), said transformers being connected to the different inverters by their primary windings and with the oscillating network by their secondary windings, said network being so designed as to ensure temporary energy storage and so as to oscillate at the said common frequency (f),

(d) control means (MC) for the phase-shifters ($D_1$...$D_n$) so designed as to supply to the latter control signals ($sc_1$...$sc_n$) as a function of the required exchanges of energy.

23. Device according to claim 22, characterised in that:

on the direct-voltage side, each controlled inverter ($Cx_1...Cx_n$) is connected with a capacitor ($Y_1, Y_2...Y_n$),

the n controlled inverters are connected in star-form by their direct-voltage terminals,

the n inputs ($E_1...E_n$) of the electric system (Sx) are connected with the n free apexes of the star brought about by coupling the inverters.

24. Device according to one of claims 22 or 23, characterised in that the oscillating network (OSC) consists of an oscillating circuit in LC series, connected in series with the pilot inverter $C_p$ and with the n secondary windings of transformers ($T_1, T_2...T_n$) which in turn are interconnected in series.

25. Device according to one of claims 22 or 23, characterised in that:

the oscillating network (OSC) consists in n identical oscillating circuits in LC series, ($OSC_1...OSC_n$),

each oscillating circuit ($OSC_1...OSC_n$) is connected in series with the secondary winding of a transformer ($T_1...T_n$),

the n circuits each of which consists in a secondary transformer winding and an oscillating circuit are connected in parallel with the pilot inverter ($C_p$).

26. Device according to one of claims 22, 23, 24 or 25, used for controlling the power exchanges between a current-reversible direct-voltage source ($S_0$) and an electric system (Sx) formed by a voltage- and/or current-reversible dipole (Sx).

27. Device according to one of claims 22, 23, 24 or 25, used for controlling the power exchanges between a current-reversible direct-voltage source ($S_0$) and a polyphased electric system (Sx).

Fig. 1

Fig. 2a

Fig. 2b

Fig. 3a

Fig. 3b

EP 0 209 944 B1

Fig. 4a

Fig. 4b

Pmoy = Pm

Fig. 5a

Fig. 5b

Pmoy = Pi

3

Fig. 6

EP 0 209 944 B1

EP 0 209 944 B1

Fig. 7a

Fig.7b

Fig.7c

Fig. 7d

Fig. 7e

Fig. 7f

5

Fig. 8a

Fig. 8b

Fig. 8c

Fig. 9

Fig. 10

Fig. 11

Fig. 12

Fig. 13

$f < f_r$

Fig. 14

Fig. 15

f<fr

f>fr    Fig. 16

Fig. 17    f<fr

Fig. 18

Fig. 19

Fig. 20